(19) Europäisches Patentamt
European Patent Office
Office européen des brevets

(11) **EP 2 388 997 A2**

(12) **EUROPEAN PATENT APPLICATION**

(43) Date of publication:
**23.11.2011 Bulletin 2011/47**

(51) Int Cl.:
**H04N 7/14** *(2006.01)*

(21) Application number: **11165798.7**

(22) Date of filing: **12.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.05.2010 JP 2010114929**

(71) Applicant: **Sony Corporation
Tokyo 108-0075 (JP)**

(72) Inventor: **Nakamura, Kazuo
Minato-ku Tokyo 108-0075 (JP)**

(74) Representative: **Robinson, Nigel Alexander Julian
D Young & Co LLP
120 Holborn
London EC1N 2DY (GB)**

(54) **Image display device, electronic apparatus, image display system, method of acquiring method, and program**

(57)     An image display device includes: an image display section in which a plurality of pixels each having a display element are arranged, an imaging section capturing an image is arrangeable on the rear surface thereof, and a plurality of light-transmissive portions are provided in a region corresponding to the imaging section; and a diffraction correction section which, for image information acquired by the imaging section through a plurality of light-transmissive portions, performs diffraction correction processing for suppressing an influence appearing in the image information because of a diffraction effect in the light-transmissive portions.

*FIG.5A*

**Description**

The present invention relates to an image display device, an electronic apparatus, an image display system, a method of acquiring an image, and a program. In particular, the present invention relates to a structure in which an imaging device is arranged on the rear surface of the image display section to capture an image of a subject on a display surface side.

There is an attempt to combine an image display device and an imaging device such that the image display device has a function other than image display (for example, JP-A-2005-176151 and JP-A-2005-010407).

According to the technique described in JP-A-2005-176151, a plurality of openings each having a minute lens are provided between pixels constituting the image display section of an image display device, and light having passed through a plurality of openings is captured by a plurality of cameras. The face of a user who views the image display device is captured at a plurality of different angles, and a plurality of obtained images are processed to generate an image in which the user is captured from the front.

According to the technique described in JP-A-2005-010407, for example, as shown in Figs. 15A to 16B, an imaging device captures an image on the basis of light having passed through a single light-transmissive portion provided in a plurality of pixels.

According to the technique described in JP-A-2005-176151, when the light-transmissive portion is very small, a diffraction effect occurs in the light-transmissive portion, such that blurring occurs in an image which is formed in the imaging device. As a result, the captured image is lacking in sharpness.

According to the technique described in JP-A-2005-176151, it is necessary to provide the minute lens in the opening, and a high-precision minute lens should be provided so as to accurately form an image in the imaging device, causing an increase in manufacturing cost of the image display device. Instead of capturing the front face of the user, the front image is created from a plurality of images captured at different angles, and a so-called CG (Computer Graphics) image, not a captured image, is provided to a contact, causing a strong sense of discomfort.

According to the technique described in JP-A-2005-010407, similarly to the technique described in JP-A-2005-176151, when the light-transmissive portion is very small, a diffraction effect occurs in the light-transmissive portion, such that blurring occurs in an image which is formed in the imaging device. As a result, the captured image is lacking in sharpness. The imaging device captures an image on the basis of light having passed through a single light-transmissive portion provided in a plurality of pixels, such that it is difficult to condense a sufficient amount of light on the imaging device.

Thus, it is desirable to provide a structure in which, when an imaging device arranged on the rear surface thereof captures a subject on a display surface side through a minute light-transmissive portion of a display section, an influence on an image because of a diffraction effect in the light-transmissive portion can be suppressed.

It is also desirable to provide a structure in which manufacturing is made at low cost and the image of a user who faces an image display section can be easily acquired.

It is also desirable to provide a structure in which a sufficient amount of light can be condensed on an imaging device.

An embodiment of the invention provides an image display device. The image display device includes an image display section in which a plurality of pixels each having a display element are arranged, an imaging section (or an imaging device: hereinafter, the same is applied in this clause) capturing an image is arrangeable on the rear surface thereof, and a plurality of light-transmissive portions are provided in a region corresponding to the imaging section, and a diffraction correction section which, for image information acquired by the imaging section through a plurality of light-transmissive portions, performs diffraction correction processing for suppressing an influence appearing in the image information because of a diffraction effect in the light-transmissive portions. With a countermeasure from the viewpoint of signal processing, it is possible to suppress an influence on an image because of the diffraction effect in the light-transmissive portions.

The diffraction correction section performs the diffraction correction processing on only a part of signal components constituting an image, thereby achieving high-speed processing compared to a case where all the signal components are processed. "A part of signal components" can be determined in various ways, and for example, it should suffice that the diffraction correction processing is performed on at least one (not all) of a plurality of signals representing the image information acquired by the imaging section. At this time, the diffraction correction processing is performed on only a signal component (typically, a green component) having a strong correlation with luminance information or only luminance information, achieving high-speed correction processing while avoiding reduction of a correction effect.

The image display device may further include a wavelength distribution measurement section which measures the wavelength distribution of external light. The diffraction correction processing may be performed with reference to the wavelength distribution of external light measured by the wavelength distribution measurement section.

It is preferable that the diffraction effect is suppressed from the viewpoint of the light-transmissive portions. For example, it is preferable that the arrangement state (the size, shape, distribution (arrangement pitch), and the like of the light-transmissive portions) of the light-transmissive portions in a light-transmissive region corresponding to the imaging section is made non-uniform. Alternatively, each of the light-transmissive portions may be constituted by a first light-transmissive portion and a second light-transmissive portion, and the second light-transmissive portion may be arranged so as to surround the first light-transmissive portion.

A condensing section which condenses light having passed through the light-transmissive portions on the imaging section may be arranged between the image display section and the imaging section, such that light having passed through the light-transmissive portions is reliably collected in the imaging section.

According to the embodiment of the invention, the imaging section (or the imaging device: hereinafter, the same is applied in this clause) is arranged on the rear surface of the image display section to capture a subject on the display surface side through the light-transmissive portions, thereby easily acquiring the image of a user who faces the display. At this time, with a countermeasure from the viewpoint of signal processing, it is possible to suppress an influence on an image because of the diffraction effect in the light-transmissive portions.

If the diffraction correction processing is performed on only a part of a plurality of signal components constituting an image, it is possible to reduce the processing time compared to a case where all the signal components are processed. At this time, if the diffraction correction processing is performed on only a luminance signal component or a signal component (for example, a green component) having a strong correlation with luminance, it is possible to reduce the processing time and to perform correction processing with precision comparable (equal) to a case where all the signal components are processed.

If a countermeasure from the viewpoint of the light-transmissive portions arranged in the light-transmissive region is carried out, it is possible to suppress the occurrence of the diffraction effect in the light-transmissive portions in advance. As a result, it is possible to more reliably suppress the influence on an image because of the diffraction effect.

If the condensing section is arranged between the image display section and the imaging section, light having passed through the light-transmissive portions is reliably condensed on the imaging section, thereby condensing a sufficient amount of light on the imaging section. A high-definition minute lens is not necessary so as to accurately form an image on the imaging surface of the imaging section, suppressing an increase in manufacturing cost of the image display device and achieving manufacturing at low cost.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:

Fig. 1A is a conceptual diagram of an image display device and an image display system of a first embodiment.
Fig. 1B is a schematic view of the most typical arrangement of a plurality of pixels constituting an image display section.
Fig. 2A is a conceptual diagram illustrating a relationship between the arrangement position of an imaging device and an image to be displayed.
Fig. 2B is a diagram showing a captured image by an image display device.
Fig. 3 is a diagram illustrating the details of an image display section.
Fig. 4A is a schematic view illustrating an influence on a captured image because of a diffraction effect.
Fig. 4B is a diagram showing an example of a captured image when a glass plate is arranged at the front of an imaging device.
Fig. 5A is a block diagram of the image display device of the first embodiment.
Fig. 5B is a block diagram of the image display system of the first embodiment.
Fig. 6 is a conceptual diagram illustrating diffracted light intensity and MTF obtained from a light-transmissive portion (opening).
Fig. 7A is a diagram (first view) schematically showing an example of the shape of a light-transmissive portion.
Fig. 7B is a diagram (second view) schematically showing an example of the shape of a light-transmissive portion.
Fig. 8A is a conceptual diagram of an image display device and an image display system of a second embodiment.
Fig. 8B is a block diagram of the image display device of the second embodiment.
Fig. 8C is a block diagram of the image display system of the second embodiment.
Fig. 9 is a diagram illustrating a first example of diffraction correction processing.
Fig. 10 is a diagram illustrating a second example of diffraction correction processing.
Fig. 11 is a diagram illustrating a third example of diffraction correction processing.
Fig. 12 is a diagram illustrating a fourth example of diffraction correction processing.
Fig. 13A is a diagram showing a first modification (first and second views) of the light-transmissive portion.
Fig. 13B is a diagram showing a first modification (third view) and a second modification of the light-transmissive portion.
Fig. 13C is a diagram showing a third modification (first and second views) of the light-transmissive portion.
Fig. 14 is a diagram showing an example of an electronic apparatus to which the image display device of this embodiment is applied.

Fig. 15A is a diagram showing a first modification of the image display device.
Fig. 15B is a diagram showing a first modification of the image display system.
Fig. 16A is a diagram showing a second modification of the image display device.
Fig. 16B is a diagram showing a second modification of the image display system.
Fig. 17A is a diagram showing a third modification (first view) of the image display device and system.
Fig. 17B is a diagram showing the third modification (second view) of the image display device and system.
Fig. 18A is a diagram showing a fourth modification of the image display device.
Fig. 18B is a diagram showing a fourth modification of the image display system.

Hereinafter, embodiments of the invention will be described in detail with reference to the drawings. In the embodiments, various numerical values or materials are for illustration and are not intended to limit the invention.

Description will be provided in the following sequence.

1. Basic Concept (overall summary, diffraction correction processing, wavelength distribution measurement, light-transmissive region, imaging device, image display section)

2. First Embodiment (overall summary, arrangement position of imaging device, sectional structure of image display section, configuration corresponding to diffraction correction, countermeasure principle against diffraction effect)

3. Second Embodiment (first embodiment and wavelength distribution measurement processing)

4. Diffraction Correction Processing (first example:

    all signals)

5. Diffraction Correction Processing (second example:

    all signals and color conversion)

6. Diffraction Correction Processing (third example:

    specific color signal→signal having correlation with luminance information)

7. Diffraction Correction Processing (fourth example:

    luminance information, assembling of first example to fourth example)

8. Modification of Light-Transmissive Portion First Modification (random arrangement) Second Modification (double annular structure) Third Modification (curb shape, L shape, or the like)

9. Substitute for Monitor of Electronic Apparatus

10. General Overview (first modification: position detection, second modification: three-dimensional image display and position detection, third modification: TV conference system, fourth modification: digital mirror) <Basic Concept>

[Overall Summary]

In an imaging device-equipped image display device (hereinafter, simply referred to as "image display device") of this embodiment, an imaging device (or imaging section: the same is applied to the following description) is arranged on the rear surface of an image display section, and a plurality of minute light-transmissive portions are provided in a light-transmissive region of the image display section corresponding to the imaging device. An image of a subject on a display surface side is captured through each light-transmissive portion.

Light having passed through the light-transmissive portions is condensed on the imaging device. Since the imaging device is arranged on the rear surface of the image display section, the face, eye, motion, or the like of a user who faces the display can be accurately captured by the imaging device. The light-transmissive portions are provided in the image display section (the display panel of the display device) such that light reaches the rear surface, and the imaging device is provided at a corresponding position. Therefore, the face, eye, motion, or the like of the user who faces the display can be accurately recognized through capturing with the imaging device, thereby increasing the added value of the display device with ease and at low cost.

If necessary, a condensing section is arranged between the image display section and the imaging device, such that light having passed through the light-transmissive portions is reliably condensed on the imaging device. The condensing section is arranged, such that a high-precision minute lens is not necessary so as to accurately form an image on the imaging device. Therefore, an increase in manufacturing cost of the image display device can be suppressed, and a sufficient amount of light can be condensed on the imaging device.

In the image display device of this embodiment, when the opening of each light-transmissive portion constituting the light-transmissive region is of a small size, if an image is captured through the opening, a so-called diffraction effect may occur, and as a result, blurring occurs or sharpness is lacking in an image formed on the imaging device.

As a countermeasure, in this embodiment, first, from the viewpoint of signal processing, an influence on a captured image because of the diffraction effect in the light-transmissive portions is corrected. From the viewpoint of the light-transmissive portions (for example, shape, size, distribution, or the like), the occurrence of the diffraction effect is suppressed.

[Diffraction Correction Processing]

From the viewpoint of signal processing, in order to correct the influence of the diffraction effect in the light-transmissive portions, an image display device and an image display system of this embodiment include a diffraction correction section. This configuration is called "configuration of first embodiment".

The diffraction correction section corrects diffraction in the light-transmissive portions constituting the light-transmissive region for captured image information acquired by the imaging device or other kinds of image data. "Other kinds of image data" refer to image data which is obtained when the imaging device captures an image of a user and should be displayed on the image display section. Hereinafter, captured image information and "other kinds of image data" are collectively and simply referred to as "image data".

For example, a part or all of (the openings of) the light-transmissive portions are provided periodically in a first direction or second direction of the image display section. At this time, when the length of each light-transmissive portion in the first direction is $L_{tr-1}$ and the pixel pitch in the first direction is $P_{px-1}$, the linear opening rate $L_{tr-1}/P_{px-1}$ may be set to satisfy the relationship "$L_{tr-1}/P_{px-1} \geq 0.5$", more preferably, the relationship "$L_{tr-1}/P_{px-1} \geq 0.8$". The upper limit value of the linear opening rate $L_{tr-1}/P_{px-1}$ is not particularly limited insofar as the light-transmissive portions can be formed. The length $L_{tr-1}$ of the light-transmissive portion in the first direction means the length per period of a line segment corresponding to the shape when the light-transmissive portion is projected in the first direction. The pixel pitch $P_{px-1}$ in the first direction means the length of the pixel per period in the first direction.

When the length of each light-transmissive portion in the second direction is $L_{tr-2}$ and the pixel pitch in the second direction is $P_{px-2}$, the linear opening rate $L_{tr-2}/P_{px-2}$ in the second direction may be set to satisfy the relationship "$L_{tr-2}/P_{px-2} \geq 0.5$", more preferably, the relationship "$L_{tr-2}/P_{px-2} \geq 0.8$". The upper limit value of the linear opening rate $L_{tr-2}/P_{px-2}$ is not particularly limited insofar as the light-transmissive portions can be formed. The length $L_{tr-2}$ of the light-transmissive portion in the second direction means the length per period of a line segment corresponding to the shape when the light-transmissive portion is projected in the second direction. The pixel pitch $P_{px-2}$ in the second direction means the length of the pixel per period in the second direction.

The first direction and the second direction may be perpendicular to each other or may cross each other at an angle other than 90 degrees as occasion demands. In the latter case, a part or all of the light-transmissive portions may be provided periodically in a third direction, fourth direction, ... of the image display section, as well as the first direction and the second direction of the image display section. In this case, it is preferable that the length of the light-transmissive portion in each of at least two directions from among the directions and the pixel pitch in each of at least two directions satisfy the above-described relationships (specifically, equal to or greater than 0.5 times, and more preferably, equal to or greater than 0.8).

As the diffraction correction processing in the diffraction correction section, processing may be performed in which a response function (representing spatial frequency characteristics) is used to estimate the sharpness (resolution) of an image acquired by the imaging device, and an MTF (modulation transfer function) which is the amplitude (absolute value) of the response function is set as an index value. As well known in the art, the response function is obtained through Fourier transform on a point image or linear image intensity distribution. The influence (the degree of blurring in an image) of resolution degradation in an image when being captured by the imaging device through the light-transmissive portions corresponds to the arrangement pattern of the light-transmissive portions (minute openings). For example, the influence (the degree of blurring in an image) of resolution degradation can be estimated on the basis of the magnitude of a frequency component in the MTF.

Thus, if inverse Fourier transform is performed on a captured image with reference to the arrangement pattern of the light-transmissive portions, an image in which the influence of resolution degradation in an image when being captured by the imaging device through the light-transmissive portions is excluded can be restored. That is, the diffraction correction processing may be performed by performing Fourier transform on the image information acquired by the imaging device and performing inverse Fourier transform on the Fourier-transformed information by using the response function (in this case, the MTF) corresponding to the arrangement state of the light-transmissive portions.

Specifically, it is preferable that MTF inverse transform processing (image restoration processing) which is calculated on the basis of the arrangement pattern (shape, size, distribution, or the like) of the light-transmissive portions is performed on the image information. The MTF inverse transform processing is performed on a signal component of a captured image by using MTF shape data. At this time, a storage section may be provided in the diffraction correction section, and MTF shape data representing the arrangement pattern, such as the shape, size, distribution, or the like of the light-transmissive portions, may be stored in the storage section in advance. In specifying the response function, a Fourier transform method may be applied in which (a signal representing) an image is Fourier-analyzed.

The method of diffraction correction processing described herein is just an example where the influence (the degree of blurring in an image) of resolution degradation in an image when being captured by the imaging device through the light-transmissive portions is corrected, and other known methods may be applied.

It is considered that the diffraction correction section is provided in, for example, an image display device as a circuit, which is constituted by a CPU having an input/output section and a memory, or an electronic apparatus in which the image display device is mounted. When the image display device and the imaging device are provided separately (detachably), it is considered that the diffraction correction section is provided in an imaging device (an example of an electronic apparatus) which is arranged on the rear surface of the image display device. In an image display system in which a peripheral equipment, such as a personal computer (electronic computer), is connected to the image display device, it is considered that the peripheral equipment has the function of the diffraction correction section.

In performing the MTF inverse transform processing on the image information, a method in which the respective signal components (for example, image information of R, G, and B) constituting the image information are processed, or a method in which a part of the signal components is processed to reduce a correction processing time is considered.

In the former case, since the MTF inverse transform processing is performed on all of the signal components constituting the image information, a processing load is imposed but a high correction effect is obtained compared to the latter case. Meanwhile, in the latter case, since the MTF inverse transform processing is performed on a part of the signal components constituting the image information, the correction effect is low compared to the former case but the processing load is reduced.

In the latter case, in this embodiment, a method (called "a specific signal-focused method") in which at least one (not all) of the signal components is processed is used. That is, in performing the diffraction correction processing, only an arbitrary signal component is corrected by using a point-spread function of corresponding color light, luminance, or arbitrary color light. Thereafter, the signal component subjected to diffraction correction and the remaining signal components which are not subjected to the diffraction correction processing are combined, and the processing is completed. Since the number of signal components which will be subjected to the correction processing is smaller than the total number of signal components representing an image, the amount of calculation decreases compared to a case where all of the signal components will be subjected to the diffraction correction processing, and the correction processing time is reduced, achieving high-speed processing.

In the case of the specific signal-focused method, it is considered that processing is performed focusing one of the colors (for example, R, G, and B). In this case, it is preferable that processing is performed particularly focusing on a luminance signal component or color image information having a (relatively strong) correlation with the luminance signal component. It is not necessary that the signal component of the image information to be processed and the component of MTF shape data for use in inverse transform are of the same type, and the components having a strong correlation can be used. It is possible to achieve high-speed correction processing while maintaining the substantial (apparent) correction effect comparable to a case where all signals are processed.

For example, it is generally known that the human being has a visual characteristic, such as strong feeling (sensitivity) to luminance (light and dark), or luminance component has a strong correlation with the green component of the image, and it is considered that the MTF inverse transform processing is performed using the feeling of the human being to luminance. That is, the MTF inverse transform processing is performed on only the luminance component of the captured image.

According to the method focusing on the visual characteristic of the human being, it has been confirmed that, from the viewpoint of blurring, an image subjected to restoration processing is comparable to an image in which the restoration processing is performed on all of the signal components constituting the image information. The processing time can be reduced compared to a case where the restoration processing is performed on all of the signal components. That is, it is possible to realize a high-speed diffraction correction processing.

In performing the processing focusing on the luminance component, a method in which MTF shape data truly corresponding to the luminance component is used for inverse transform, or a method in which MTF shape data corresponding to the green component having a strong correlation with the luminance component is substituted may be used. In the latter case, in performing the diffraction correction processing, only the luminance signal component is corrected by using the point-spread function of green light, achieving reduction of the correction processing time. The reason is as follows. According to the visual characteristic of the human being, since the occupying ratio of the green component in the luminance component is large, MTF shape data of the green component may be substituted in the MTF inverse transform processing of the luminance component. Since MTF shape data of the green component obtained through image capturing is substituted, it is not necessary to obtain MTF shaped data of the luminance component, thereby reducing the processing load.

In this embodiment, from the viewpoint of processing speed or correction precision, the user can select an appropriate method from among various diffraction correction processing methods.

[Wavelength Distribution Measurement]

The image display device and the image display system of this embodiment can further include a wavelength distribution measurement section which measures the wavelength distribution of external light. This configuration is called "configuration of second embodiment".

With the configuration of the second embodiment, in the diffraction correction processing, the wavelength distribution of external light as well as the shape, size, and distribution of the light-transmissive portions can be taken into consideration, thereby improving the precision of the MTF inverse transform processing and obtaining an optimum image without depending on external light (external illumination environment). It is also possible to improve the precision of the image information (for example, to improve the precision of color information) acquired by the imaging device.

The wavelength distribution measurement section can be constituted by, for example, a light-receiving device, such as a photosensor. It is considered that the control of the wavelength distribution measurement section is provided in the image display device as a control circuit which is constituted by a CPU having an input/output section and a memory, or an electronic apparatus in which the image display device is mounted. In an image display system in which a peripheral equipment, such as a personal computer (electronic computer), is connected to the image display device, it is considered that the peripheral equipment has the function of controlling the wavelength distribution measurement section.

[Light-Transmissive Region]

It is preferable that the light-transmissive region which is provided in the image display section of the image display device of this embodiment is formed in a portion corresponding to a portion where the imaging device is provided. In the light-transmissive region, a plurality of light-transmissive portions each having a minute opening, through which light representing a subject image on the display surface side passes, are provided.

In a first configuration example, the light-transmissive region is configured such that the light-transmissive portion is provided in a plurality of pixels. In a second configuration example, the light-transmissive region is configured such that the light-transmissive portion is provided in at least one pixel (preferably, at least two pixels). In this case, the light-transmissive portion may be provided in the entire periphery of the pixel or may be provided in a part of the periphery of the pixel (specifically, over two or more continuous sides from among the sides corresponding to the boundary of the pixels). In the latter case, it is preferable that the light-transmissive region is provided over a length equal to or greater than 1/4 of the entire circumference of the pixel (in the case of two continuous sides, equal to or greater than 1/2 times the length of each side).

With this configuration, light having passed through the light-transmissive portion provided in a plurality of pixels is condensed on the imaging device, or light having passed through the light-transmissive portion provided in the periphery of at least one pixel is condensed on the imaging device. Thus, it is not necessary to provide a high-definition minute lens so as to accurately form an image on the imaging device. Therefore, an increase in manufacturing cost of the imaging device-equipped image display device can be suppressed, and a sufficient amount of light can be condensed on the imaging device.

Although in the first configuration example, the light-transmissive portion is provided in a plurality of pixels, for example (though not limited thereto), it is preferable that the light-transmissive portion is provided in three or more pixels. The external shape of the light-transmissive portion constituting the light-transmissive region is intrinsically arbitrary, and a rectangular shape, such as an oblong shape or a square shape, may be used.

Although in the second configuration example, the light-transmissive region is configured such that the light-transmissive portion is provided in the periphery of at least one pixel, for example (though not limited thereto), it is preferable that the light-transmissive portion is provided in the periphery of three or more pixels. The external shape of the light-transmissive portion is intrinsically arbitrary. For example, an "L" shape (a form in which the light-transmissive portion is provided in two continuous sides from among the sides corresponding to the boundary of the pixels), a "U" shape (a form in which the light-transmissive portion is provided in three continuous sides from among the sides corresponding to the boundary of the pixels), a "square" shape (a form in which the light-transmissive portion is provided in all the sides corresponding to the boundary of the pixels), a curb shape (a form in which the light-transmissive portion is provided in all the sides corresponding to the boundary of the pixels and provided in common between adjacent pixels) may be used. Alternatively, it is considered that the light-transmissive portion is provided in the periphery of a pixel group including the projection image of a lens provided in the imaging device.

In the image display device of this embodiment, when the light-transmissive region is constituted by a plurality of minute light-transmissive portions, for example, it is preferable that, with regard to the shape, size, distribution (arrangement pitch or arrangement position relationship), or the like of the light-transmissive portions, a diffraction effect suppression method is carried out (contrived) in advance so as to suppress the occurrence of the diffraction effect. The term "minute" means that, when the diffraction effect suppression method of this embodiment is not carried out, the size of the opening of each of a plurality of light-transmissive portions is set to an extent that light (electromagnetic waves) passes through the opening, and the diffraction effect occurs, causing blurring.

A first diffraction effect suppression method for the light-transmissive portions is configured such that the arrangement state of a plurality of light-transmissive portions in the light-transmissive region is made non-uniform (random). The purport resides in that, since blurring due to the diffraction effect intensively appears if the size, shape, distribution, or the like of the light-transmissive portions is made uniform (the same), from this viewpoint, blurring scarcely occurs (is unlikely to occur). The size, shape, and distribution (arrangement pitch) of the light-transmissive portions are optimized, thereby reliably suppressing the occurrence of the diffraction effect.

Specifically, at least one of three forms including a form in which the size of a plurality of light-transmissive portions is made random [case A], a form in which the shape of a plurality of light-transmissive portions is made random [case B], and a form in which the distribution of a plurality of light-transmissive portions is made random [case C] is used. That is, [case A], [case B], and [case C] may be used alone, and an arbitrary combination thereof may be used.

In the form [case A], specifically, at least two light-transmissive portions adjacent to one light-transmissive portion in the horizontal direction and/or the vertical direction have a size different from the one light-tranamissive portion.

In the form [case B], specifically, at least two light-transmissive portions adjacent to one light-transmissive portion in the horizontal direction and/or the vertical direction have a shape different from the one light-transmissive portion.

In the form [case C], the distribution is made random in accordance with the arrangement pitch or arrangement position relationship of a plurality of light-transmissive portions. Specifically, the arrangement position relationship of at least two light-transmissive portions adjacent to one light-transmissive portion in the horizontal direction and/or the vertical direction is different from the arrangement position relationship in the same relationship as the one light-transmissive portion with respect to a light-transmissive portion adjacent to the one light-transmissive portion in the horizontal direction and/or the vertical direction. In other words, with regard to the arrangement pitch between two light-transmissive portions, at least two adjacent arrangement pitches adjacent to one arrangement pitch to be focused in the horizontal direction and/or the vertical direction is different from the one arrangement pitch.

In a second diffraction effect suppression method for the light-transmissive portions, a form [case D] in which the light-transmissive portions have a double annular structure (double disintermediation structure). Specifically, each light-transmissive portion may be constituted by a first light-transmissive portion and a second light-transmissive portion, and the second light-transmissive portion may be arranged so as to surround the first light-transmissive portion. The size, shape, and arrangement state of the first light-transmissive portion and the second light-transmissive portion, and the positional relationship between the first light-transmissive portion and the second light-transmissive portion are optimized, thereby reliably suppressing the occurrence of the diffraction effect.

The form [case D] may be combined with the form [case A], [case B], or [case C] or may be combined with a form in which the forms [case A], [case B], and [case C] are arbitrarily combined with each other.

The diffraction effect suppression method is applied in the light-transmissive region, such that it is possible to suppress the occurrence of the diffraction effect in the light-transmissive portion. With a combination of the diffraction correction processing from the viewpoint of signal processing, it is possible to more reliably suppress blurring or a problem regarding resolution due to the diffraction effect.

[Imaging Device]

In the image display device of this embodiment, although the imaging device (imaging section) may be arranged on the rear surface of the image display section, it is preferable that the imaging device is arranged in the central portion of the image display section. A single imaging device may be provided or a plurality of imaging devices may be provided. The imaging device may use a known and commercial solid-state imaging element having a CCD element or a CMOS sensor.

In the image display device of the embodiment, it is preferable that a condensing section which condenses light having passed through the light-transmissive portions of the light-transmissive region on the imaging device is arranged between the image display section and the imaging device. As the condensing section, a known lens can be used. Specifically, the lens may be constituted by a biconvex lens, a planoconvex lens, or a meniscus lens, or may be constituted by a reflecting mirror or a Fresnel lens. Various convex lenses may be combined or a concave lens and various convex lenses may be combined.

As the imaging device, a solid-state imaging device, such as a known and commercial video camera or a web camera, may be used. In this case, the condensing section and the imaging device are combined as a single body.

In the image display device of this embodiment, it is preferable that no color filter is arranged in the optical path of light which is incident on the image display section, passes through the light-transmissive portions, is emitted from the image display section, and is incident on the condensing section. It is also preferable that no focusing system, such as a microlens, is arranged in the optical path.

[Image Display Section]

In the image display section which is used in the image display device of this embodiment, it should suffice that the light-transmissive portion can be formed in a space between (the display portions of) the pixels, and an electro-optical element in which luminance changes depending on a voltage which is applied thereto or a current which flows therein is used as the display element of the pixel.

For example, there is a liquid crystal display element as a representative example of an electro-optical element in which luminance changes depending on a voltage which is applied thereto, or an an organic electroluminescence (organic EL, Organic Light Emitting Diode, OLED; hereinafter, referred to as organic EL) as a representative example of an electro-optical element in which luminance changes depending on a current which flows therein. The organic EL display using the latter organic EL element is a so-called self-luminous display device using a self-luminous light-emitting element (self-luminous element) as the display element of the pixel. Meanwhile, a liquid crystal display element constituting a liquid crystal display controls passage of light from the outside (light from the front surface or rear surface; in the case of the front surface, external light may be included), and the pixel does not include a light-emitting element.

For example, in recent years, an organic EL display is attracting attention as a flat panel display (FP display). Although a liquid crystal display (LCD) is the mainstream as the FP display, the liquid crystal display is not a self-luminous device, thus it is necessary to provide members, such as a backlight and a polarizing plate. For this reason, there is a problem in that the FD display increases in thickness, luminance is lacking, or the like. Meanwhile, the organic EL display is a self-luminous device, in principle, and it is not necessary to provide the members, such as a backlight. Thus, the organic EL display has many advantages, such as reduction in thickness and high luminance, compared to the LCD. In particular, in an active matrix organic EL display in which a switching element is arranged in each pixel, it is possible to suppress current consumption by holding and turning on the respective pixels, and to relatively easily achieve a large screen and high definition. Therefore, the companies are developing the organic EL displays, and it is anticipated that the organic EL display become the mainstream of the next-generation FP display.

As the self-luminous display device, in addition to the organic EL display, there are a plasma display panel (PDP), a field emission display (FED), a surface-conduction electron-emitter display (SED), and the like. These may be applied to the image display section of this embodiment.

However, with regard to the image display device of the embodiment, it is preferable that the light-emitting element of the image display section is a self-luminous light-emitting element, and more preferably, is constituted by an organic EL element. When the light-emitting element is constituted by an organic EL element, an organic layer (light-emitting portion) constituting the organic EL element includes a light-emitting layer made of an organic light-emitting material. Specifically, for example, the organic layer may be constituted by a laminate structure of a hole transport layer, a light-emitting layer, and an electron transport layer, a laminate structure of a hole transport layer and a light-emitting layer serving as an electron transport layer, or a laminate structure of a hole injection layer, a hole transport layer, a light-emitting layer, an electron transport layer, and an electron injection layer.

When an electron transport layer, a light-emitting layer, a hole transport layer, and a hole injection layer are unitized as a "tandem unit", the organic layer may have a two-stage tandem structure in which a first tandem unit, a connection layer, and a second tandem unit are laminated or a three or more-stage tandem structure in which three or more tandem units are laminated. In this case, a color to be emitted is changed to red, green, and blue between the respective tandem units, such that the organic layer which emits white as a whole can be obtained.

The thickness of the organic layer is optimized, such that light which is emitted from the light-emitting layer is resonated between a first electrode and a second electrode, and a part of light is emitted to the outside through the second electrode.

When the light-emitting element of the image display section in the image display device of this embodiment is an organic EL element, the image display device includes a first substrate, a driving circuit which is provided on the first substrate, an insulating interlayer which covers the driving circuit, a light-emitting portion which is provided on the insulating interlayer, a protective layer which is provided on the light-emitting portion, a light-blocking layer which is provided on the protective layer, and a second substrate which covers the protective layer and the light-blocking layer.

Each pixel includes a driving circuit and a light-emitting portion, and an opening is provided in the light-blocking layer. The opening and a portion of the protective layer and a portion of the insulating interlayer below the opening constitute the light-transmissive portion. The imaging device is arranged on the surface of the first substrate which does not face the second substrate.

As the arrangement of the pixels, for example, a stripe arrangement, a diagonal arrangement, a delta arrangement, or a rectangle arrangement may be used. As the first substrate or the second substrate, a high-distortion-point glass substrate, a soda glass ($Na_2O \cdot CaO \cdot SiO_2$) substrate, a borosilicate glass ($Na_2O \cdot B_2O_3 \cdot SiO_2$) substrate, a forsterite ($2MgO \cdot SiO_2$) substrate, a lead glass ($Na_2O \cdot PbO \cdot SiO_2$) substrate, various glass substrates with an insulating film formed on the surface thereof, a quartz substrate, a quartz substrate with an insulating film formed on the surface thereof, a silicon substrate with an insulating film formed on the surface thereof, or an organic polymer (having a form of a polymer material, such as a plastic film, a plastic sheet, or a plastic substrate having plasticity made of a polymer material), such as polymethylmethacrylate (PMMA), polyvinyl alcohol (PVA), polyvinyl phenol (PVP), polyether sulfone (PES), polyimide, polycarbonate, or polyethylene terephthalate (PET), may be used.

The driving circuit may be constituted by, for example, one or a plurality of thin-film transistors (TFT) or the like. Examples of the material for the insulating interlayer include $SiO_2$-based materials, such as $SiO_2$, BPSG, PSG, BSG, AsSG, PbSG, SiON, SOG (Spin-On Glass), low-melting-point glass, and glass paste; SiN-based materials; and insulating resin, such as polyimide. These materials may be used alone or in combination. When each pixel is constituted by an organic EL element, the light-emitting portion is as described above. As the material for the protective film, a material which is transparent to light emitted from the light-emitting portion and blocks moisture tight. Specific examples of the material for the protective film include amorphous silicon ($\alpha$-Si), amorphous silicon carbide ($\alpha$-SiC), amorphous silicon nitride ($\alpha$-Si$_{1-x}$N$_x$), amorphous silicon oxide ($\alpha$-Si$_{1-y}$O$_y$), amorphous carbon ($\alpha$-C), amorphous silicon oxynitride ($\alpha$-SiON), and $Al_2O_3$. The light-blocking film (black matrix) may be made of a known material. If necessary, a color filter may be provided.

The image display section is constituted by arranging a plurality of pixel units each having a display element (light-emitting element). When the number of pixel units is represented by (M,N), in addition to VGA (640, 480), S-VGA (800,600), XGA (1024,768), APRC (1152, 900), S-XGA (1280,1024), U-XGA (1600,1200), HD-TV (1920,1080), and Q-XGA (2048,1536), (1920,1035), (720,480), (854,480), (1280,960), and the like may be used as the resolution for image display, which are not intended to limit the invention.

In an image display section which performs color display, each pixel unit includes three pixels of a red pixel which displays a red (R) component, a green pixel which displays a green (G) component, and a blue pixel which displays a blue (B) component. Alternatively, each pixel unit includes four or more pixels of the three pixels, a pixel which displays white

light so as to improve luminance, a pixel which displays a complementary color so as to expand the color reproduction range, a pixel which displays yellow so as to expand the color reproduction range, a pixel which displays yellow and cyan so as to expand the color reproduction range, and the like.

The image display device of this embodiment is an example of an electronic apparatus, and may be configured such that the imaging device can be arranged on the rear surface of the display panel, and the imaging device can be detachably or fixedly mounted therein.

The image display device may be used as, for example, a substitute for a monitor constituting a personal computer or a substitute for a monitor which is incorporated in a notebook personal computer. The image display device may also be used as a substitute for a monitor which is incorporated in a mobile phone, a PDA (Personal Digital Assistant), or a game machine, or a known television receiver.

<First Embodiment>

[Overall Summary]

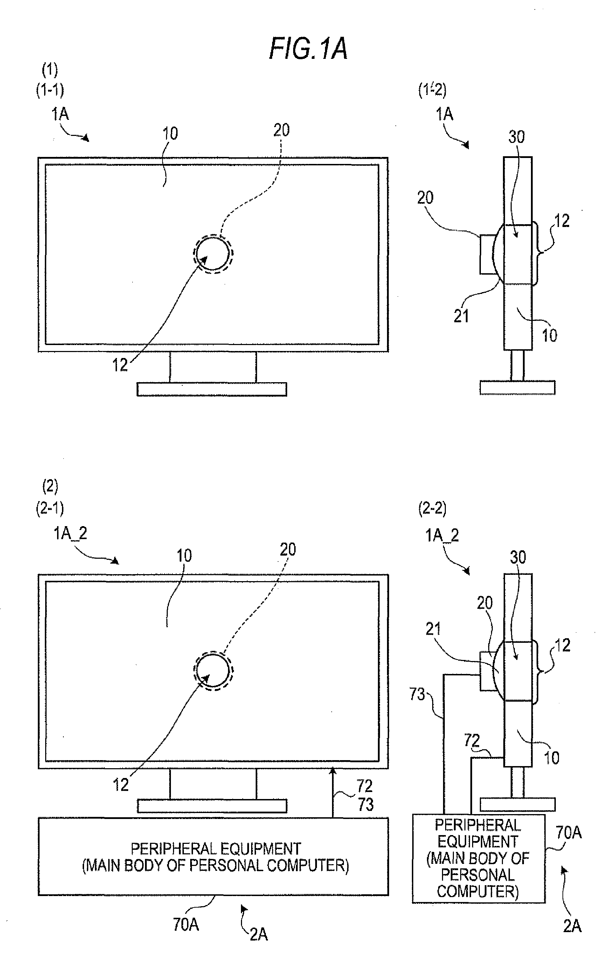

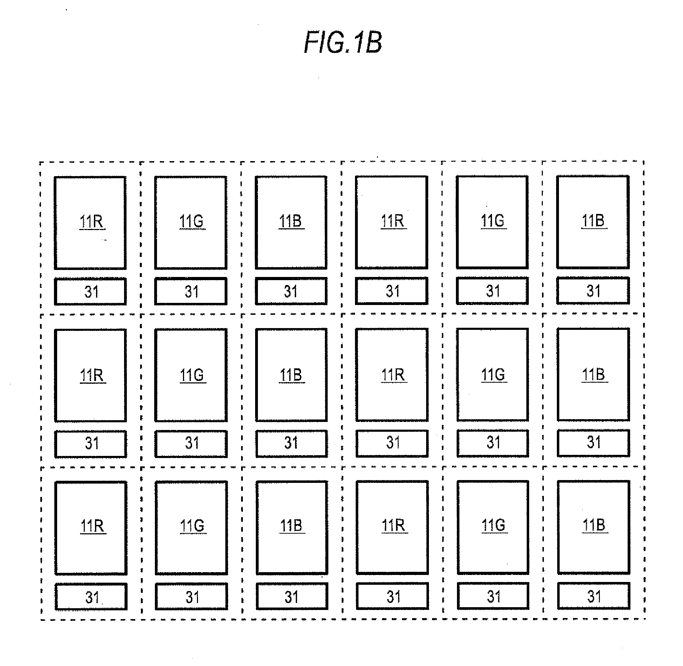

Figs. 1A and 1B are diagrams illustrating the concept of an image display device and an image display system of a first embodiment. (1) of Fig. 1A is a conceptual diagram of an image display device, and (2) of Fig. 1A is a conceptual diagram of an image display system. (1-1) of Fig. 1A is a conceptual diagram when the image display device is viewed from the front surface, and (1-2) of Fig. 1A is a conceptual diagram when the image display device is viewed from the lateral surface. (2-1) of Fig. 1A is a conceptual diagram when the image display system is viewed from the front surface, and (2-2) of Fig. 1A is a conceptual diagram when the image display system is viewed from the lateral surface. Fig. 1B is a diagram schematically showing the most typical arrangement of a plurality of pixels constituting an image display section.

As shown in (1) of Fig. 1A, an image display device 1A of the first embodiment has an image display section 10, an imaging device 20 which is arranged on the rear surface of the image display section 10, light-transmissive portions 30 which are formed in the image display section 10, and a condensing section 21 which condenses light having passed through the light-transmissive portions 30 on the imaging device 20. The imaging device 20 may be detachably arranged on the rear surface of the image display device 1A. A portion of the image display section 10 corresponding to the imaging device 20 becomes a light-transmissive region 12. For example, a portion of the image display section 10 corresponding to at least an effective imaging region of the imaging device 20 becomes the light-transmissive region 12. When the light-transmissive region 12 is narrower than the effective imaging region of the imaging device 20, the actual imaging region in the imaging device 20 is narrowed.

The imaging device 20 is arranged on the rear surface of the image display section 10, specifically, in the central portion of the rear surface of the image display section 10. A single imaging device 20 is provided. The imaging device 20 and the condensing section 21 are combined as a single body, that is, are constituted by a known and commercial video camera including a CCD element or the like. A camera which is optimized so as to be arranged on the rear surface of the image display section 10, and includes a condensing section and an imaging element may be used.

The image display device 1A is used as, for example, a substitute for a monitor constituting a personal computer. That is, as shown in (2) of Fig. 1A, an image display system 2A of the first embodiment is configured such that a peripheral equipment 70A, such as a main body of a personal computer (electronic computer) is connected to an image display device 1A_2. The peripheral equipment 70A (the same is applied to other peripheral equipments 70 described below) is an example of an electronic apparatus. The image display device 1A_2 functions as the monitor of the peripheral equipment 70A. In the image display device 1A_2, some functional sections of the image display device 1A are removed. The removed functional sections are incorporated into the peripheral equipment 70A. The peripheral equipment 70A, the image display section 10, and the imaging device 20 are connected to each other by cables 72 and 73.

For the pixels 11 of the image display section 10, pixels which are constituted by self-luminous light-emitting elements, specifically, organic EL elements are used. The image display section 10 is constituted by an XGA type organic EL display for color display. That is, when the number of pixel units is represented by (M,N), the resolution is (1024, 768).

As shown in Fig. 1B, one pixel unit includes a red light-emitting pixel 11R which emits red light, a green light-emitting pixel 11G which emits green light, and a blue light-emitting pixel 11B which emits blue light. The outer edge of each pixel is indicated by a broken line (the same is applied to other examples described below).

In the image display section 10, a plurality of pixels 11 (11R, 11G, and 11B) each having a display element are arranged, the light-transmissive portions 30 are provided in a plurality of pixels 11 of the light-transmissive region 12 of the image display section 10. Although in this example, the light-transmissive portion 30 is provided in each pixel 11, if necessary, the light-transmissive portion 30 may be provided over a plurality of pixels 11. Although in this example, the light-transmissive portion 30 is provided in each pixel 11 (in all the pixels 11 of the light-transmissive region 12), if necessary, the light-transmissive portion 30 may be provided in at least a plurality of pixels 11 of the light-transmissive region 12. For example, no light-transmissive portion 30 may be provided in a part of the pixels 11 of the light-transmissive region 12 for every two pixels or the like.

Though it is not intended to limit the invention, the light-transmissive portions 30 are provided in, for example, $6 \times 3 = 18$ pixels 11. One light-transmissive portion 30 is provided in one pixel. The condensing section 21 condenses light having passed through the light-transmissive portions 30 in the $6 \times 3 = 18$ pixels 11 on the imaging device 20. The shape of each light-transmissive portion 30 is an oblong shape.

Though not shown, in the image display section 10, a scanning signal supply IC which drives the scanning lines and an image signal supply IC which supplies image signals are arranged. A scanning line control circuit is connected to the scanning signal supply IC, and a signal line control circuit is connected to the image signal supply IC. No color filter is arranged in the optical path of light which is incident on the image display section 10, passes through the light-transmissive portion 30, is emitted from the image display section 10, and is incident of the condensing section 21. No focusing system, such as a microlens, is arranged in the optical path.

[Arrangement Position of Imaging Device]

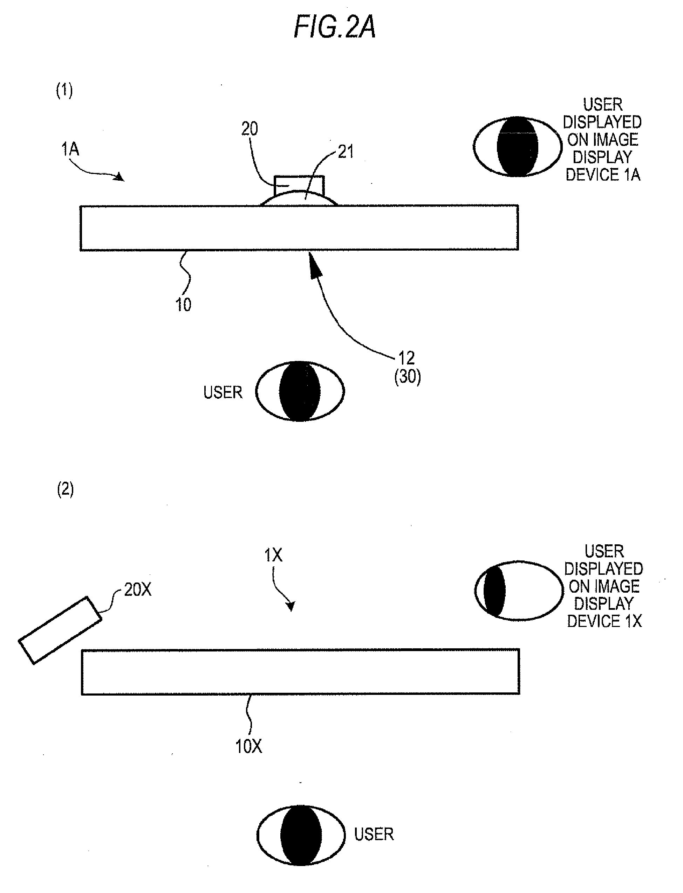

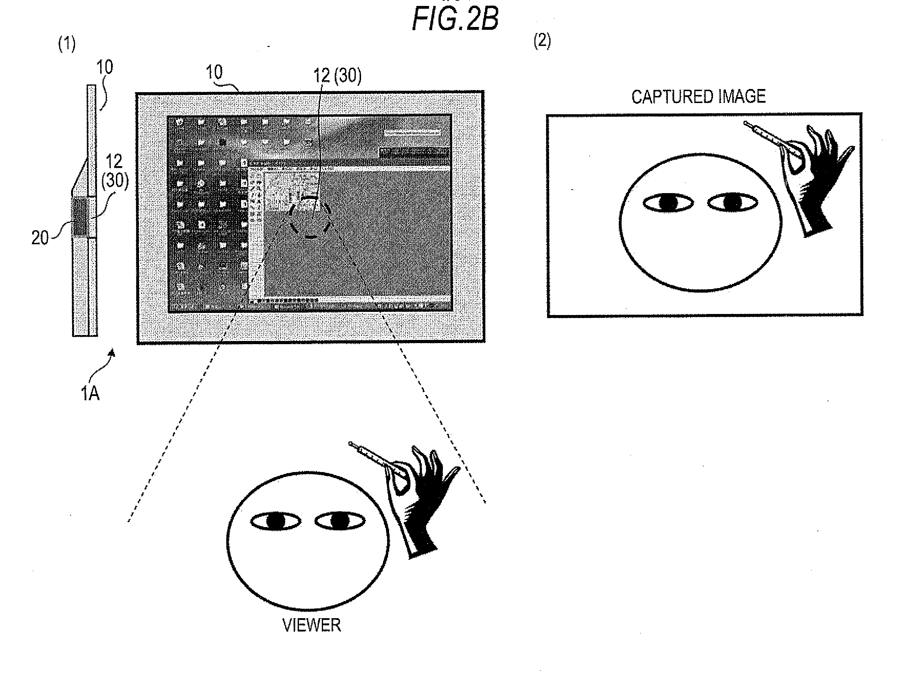

Figs. 2A and 2B are conceptual diagram illustrating the relationship between the arrangement position of the imaging device and an image to be displayed. (1) of Fig. 2A shows the image display device 1A of the first embodiment, and (2) of Fig. 2A shows an image display device 1X of a comparative example where an imaging device is fixed outside an image display section. Fig. 2B is a diagram showing a captured image by the image display device 1A.

As shown in (2) of Fig. 2A, when an imaging device 20X is fixed outside an image display section 10X, the imaging device 20X obliquely captures an image of a user of the image display device 1X, and when the resultant image is displayed on the image display section 10X, the obliquely captured image of the user is displayed on the image display section 10X. Thus, it is difficult to accurately display the face of the user and to accurately determine which of the image display section 10X the user watches. When the user is near the image display section 10X, there is a high possibility that the user is out of the imaging range.

Meanwhile, as shown in (1) of Fig. 2A, in the image display device 1A of the first embodiment, the imaging device 20 is arranged in the central portion of the rear surface of the image display section 10. For this reason, the imaging device 20 can capture an image of the user of the image display device 1A from the front surface, and when the resultant image is displayed on the image display section 10, the image of the user captured from the front surface is displayed on the image display section 10. Thus, it is possible to accurately display the face of the user and to easily and accurately determine which of the image display section 10 the user watches. Even when the user is near the image display section 10, it is possible to capture the image of the user.

In the image display device 1A, light having passed through the light-transmissive portion 30 (a plurality of light-transmissive portions 30) a plurality of pixels 11 of the light-transmissive region 12 is condensed on the imaging device 20. Thus, it is not necessary to provide a high-definition minute lens so as to accurately form an image on the imaging device 20. Therefore, an increase in manufacturing cost of the image display device 1A can be suppressed, and a sufficient amount of light can be condensed on the imaging device 20.

For example, (1) of Fig. 2B shows a state where a viewer (a subject captured by the imaging device 20) issues an instruction with a pen while viewing a display image on the image display section 10. The imaging device 20 is provided on the rear surface of the image display device 1A (image display section 10), and as shown in (2) of Fig. 2B, can capture an image of the face, eye, or hand of the viewer who faces the display surface or the pen. Thus, for example, it is possible to detect the line of sight of the viewer from the captured image. It is possible to specify a corresponding directed point of the image display section 10 from the motion of the hand or the pen, easily adding a so-called pointer function to the image display device 1A. In addition to the pointer function, the face or eye of the user, the motion of the hand, ambient brightness, or the like is found from the captured image, such that various kinds of information can be obtained from the image display device 1A and sent to various systems, thereby increasing the added value of the image display device 1A.

[Sectional Structure of Image Display Section]

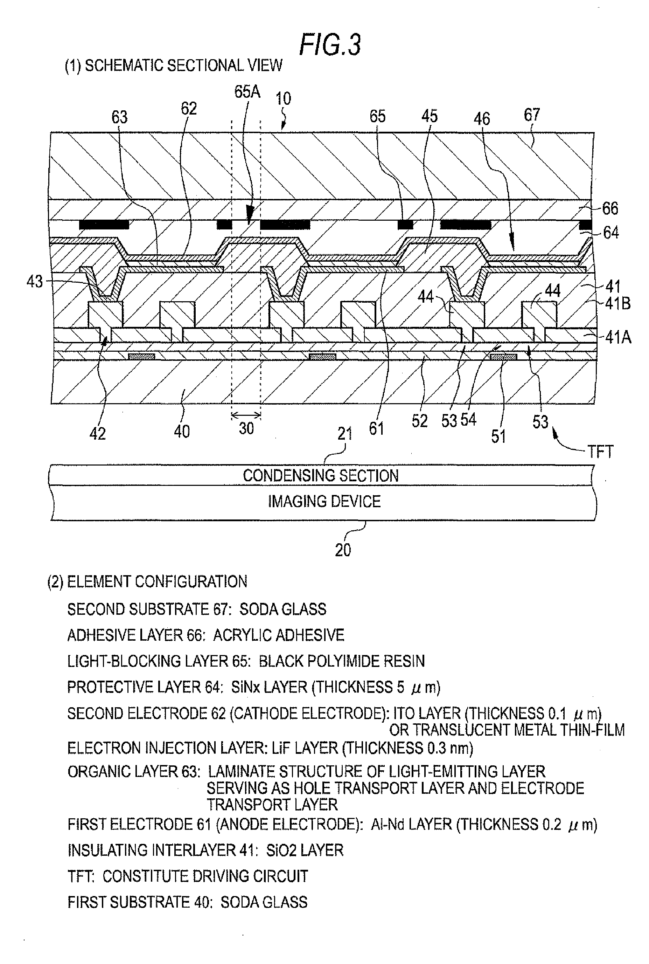

Fig. 3 is a diagram illustrating the details of the image display section 10. (1) of Fig. 3 is a schematic partial sectional view of the image display section 10. (2) of Fig. 3 is a chart collectively showing the detailed configuration of the light-emitting element of the image display section 10.

The image display section 10 includes a first substrate 40, a driving circuit which is provided on the first substrate 40 and includes a plurality of TFTs, an insulating interlayer 41 which covers the driving circuit, an organic layer 63 (light-emitting portion) which is provided on the insulating interlayer 41, a protective layer 64 which is provided on the organic layer 63, a light-blocking layer 65 which is provided on the protective layer 64, and a second substrate 67 which covers the protective layer 64 and the light-blocking layer 65.

Each pixel 11 includes a driving circuit and a light-emitting portion, and an opening 65A is provided in the light-blocking layer 65. The opening 65A and a portion of the protective layer 64, a portion of a second electrode 62, and a portion of the insulating interlayer 41 below the opening 65A constitute the light-transmissive portion 30. The condensing section 21 and the imaging device 20 are arranged on the surface of the first substrate 40 which does not face the second substrate 67.

Specifically, the driving circuit is provided on the first substrate 40 made of soda glass. Each TFT constituting the driving circuit has a gate electrode 51 which is formed on the first substrate 40, a gate insulating film 52 which is formed on the first substrate 40 and the gate electrode 51, source and drain regions 53 which are provided in a semiconductor layer formed on the gate insulating film 52, and a channel forming region 54 which corresponds to a portion of the semiconductor layer above the gate electrode 51 between the source and drain regions 53. Although in the example of the drawing, the TFT is of a bottom gate type, the TFT may be a top gate type.

The gate electrode 51 of the TFT is connected to a corresponding scanning line (not shown). The insulating interlayer 41 (41A and 41B) covers the first substrate 40 and the driving circuit. A first electrode 61 constituting the organic EL element is provided on the insulating interlayer 41B made of $SiO_x$, $SiN_y$, polyimide resin, or the like. The TFT and the first electrode 61 are electrically connected to each other through a contact plug 42 provided in the insulating interlayer 41A, a wiring line 43, and a contact plug 44. In the drawing, one TFT is shown for one organic EL element driving section.

An insulating layer 45 which has an opening 46 is provided on the insulating interlayer 41, and the first electrode 61 is exposed at the bottom of the opening 46. The insulating layer 45 is excellent in flatness and made of an insulating material having low absorption so as to prevent deterioration of the organic layer 63 due to moisture to maintain light-emitting luminance, specifically, polyimide resin. The organic layer 63 having a light-emitting layer made of an organic light-emitting material is provided over a portion of the first electrode 61 exposed at the bottom of the opening 46 to a portion of the insulating layer 45 surrounding the opening 46. Although the organic layer 63 has a laminate structure of a hole transport layer and a light-emitting layer serving as an electron transport layer, one layer is shown in the drawing.

The insulating protective layer 64 made of amorphous silicon nitride ($\alpha$-$Si_{1-x}N_x$) is provided on the second electrode 62 by a plasma CVD method so as to prevent moisture from reaching the organic layer 63. The light-blocking layer 65 made of polyimide resin of black is formed on the protective layer 64, and the second substrate 67 made of soda glass is arranged on the protective layer 64 and the light-blocking layer 65. The protective layer 64, the light-blocking layer 65, and the second substrate 67 are bonded to each other by an adhesive layer 66 made of an acrylic adhesive.

The first electrode 61 is used as an anode electrode, and the second electrode 62 is used as a cathode electrode. Specifically, the first electrode 61 is made of a light-reflective material, such as aluminum (Al), silver (Ag), or an alloy of these metals, to have a thickness of 0.2 $\mu$m to 0.5 $\mu$m, and the second electrode 62 is made of a transparent conductive material, such as ITO or IZO, to have a thickness of 0. 1 $\mu$m, or a metal thin-film (translucent metal thin-film), such as silver (Ag) or a magnesium (Mg), which transmits light to some extent to have a thickness of about 5 nm. The second electrode 62 is not patterned and is formed in a single sheet shape. As occasion demands, an electron injection layer (not shown) made of LiF having a thickness of 0.3 nm may be provided between the organic layer 63 and the second electrode 62.

As a result, the detailed configuration of the light-emitting element of the image display section 10 in the image display device 1A of this embodiment is as shown in (2) of Fig. 3.

The first substrate 40, the protective layer 64, and the light-blocking layer 65 constitute a display element substrate. The second substrate 67 functions as a sealing substrate. Here, the opening 65A which forms the light-transmissive portion 30 provided in the second substrate 67 is a portion of the display element substrate where there are no pixel electrode (the first electrode 61), TFT (including the gate electrode 51), and wiring line. The protective layer 64 serving as a sealant, the second electrode 62 serving as an EL common electrode, the insulating layer 45 serving as a pixel separation film, the insulating interlayer 41 (41A and 41B) serving as a planarization insulating film, the source and drain regions 53, and the gate insulating film 52 have light transmittance. Thus, external light which is incident from the display surface (the second substrate 67) side can reach the rear surface (the first substrate 40) through the opening 65A.

The imaging device 20 which is provided on the rear surface of the panel is provided such that the imaging surface approaches the rear surface of the panel with the light-transmissive portion 30 (the opening 65A) (in this example, the condensing section 21 is interposed). Thus, external light which is incident from the display surface side is focused by the lens (not shown) of the imaging device 20 and enters the solid-state imaging element, such as CCD or CMOS, such that it is possible to capture an image of the subject on the display surface side.

[Configuration corresponding to Diffraction Correction]

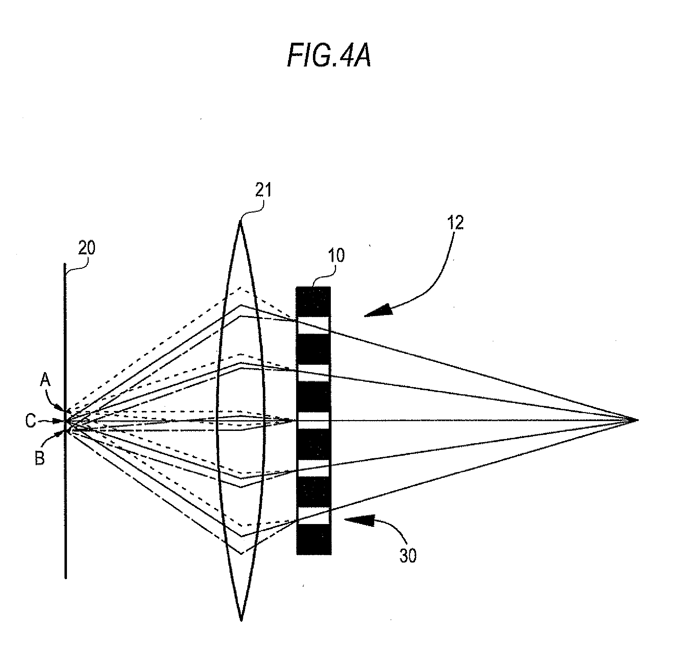

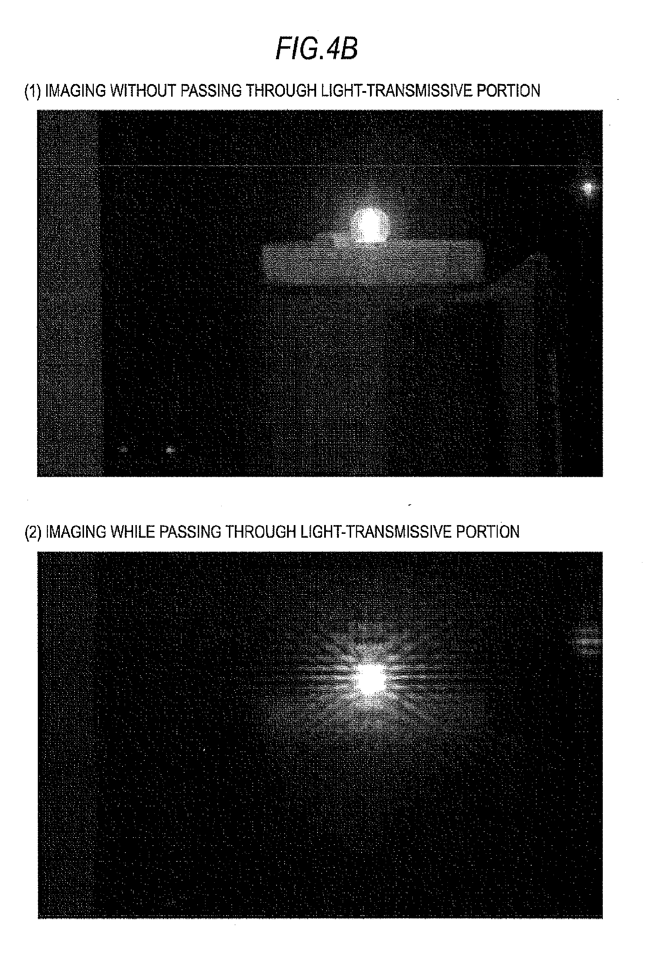

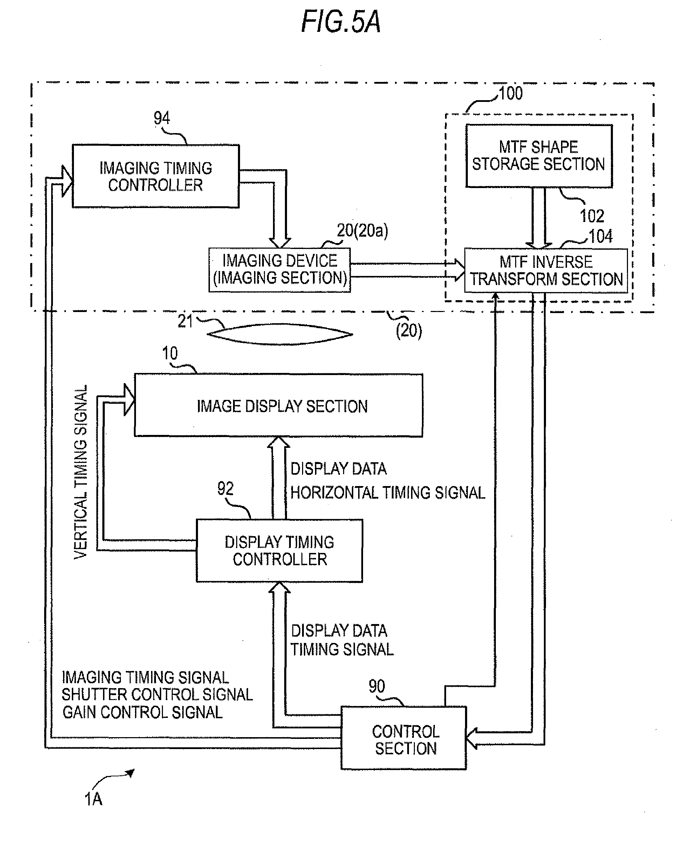

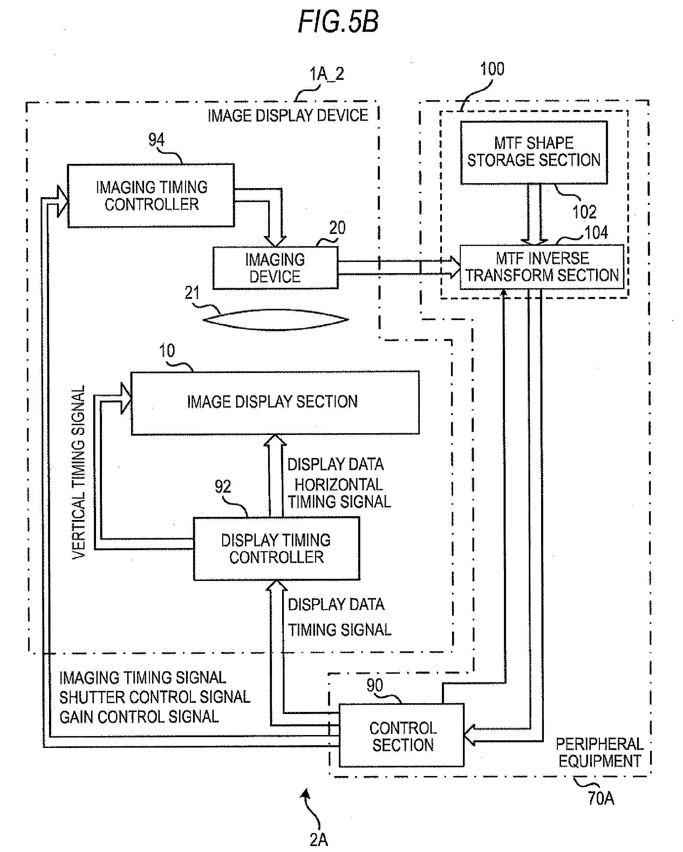

Figs. 4A to 5B are diagrams illustrating a diffraction effect and a countermeasure. Fig. 4A is a schematic view illustrating an influence on a captured image because of a diffraction effect. Fig. 4B is a diagram showing an example of a captured image when a glass plate is arranged at the front of the imaging device 20. Fig. 5A is a block diagram of the image display device 1A of the first embodiment in which the influence of the diffraction effect is corrected (compensated for) from the viewpoint of signal processing. Fig. 5B is a block diagram of the image display system 2A of the first embodiment in which the influence of the diffraction effect is corrected (compensated for) from the viewpoint of signal processing.

In the image display device 1A of the first embodiment, an organic EL element is used as the display element, only the light-transmissive portions 30 are provided, and the imaging device 20 is provided on the rear surface (the first substrate 40), such that it is possible to capture an image of a subject on the display surface (the second electrode 62) side.

It is possible but difficult to realize this simple configuration in a so-called LCD, and it is more difficult to realize a structure through which light including a visible light wavelength passes. In contrast, in the image display device 1A of the first embodiment, only the light-transmissive portions 30 are provided, such that it is possible to capture an image of a subject on the display surface side from the rear surface with a simple configuration.

On the other hand, in general, when an image is captured through a small light-transmissive opening, a so-called diffraction effect occurs in the light-transmissive opening. That is, as shown in Fig. 4A, if the imaging device 20 is provided on the rear surface of an object (the image display section 10) in which the minute light-transmissive portion 30 is provided at a predetermined pitch, and an image is captured through the light-transmissive portion 30, the light-transmissive portion 30 functions as an optical slit. For this reason, the same image as an image "C" appears as an image "A" and an image "B" at a regular pitch because of the diffraction effect, and as a result, blurring occurs in the image. (1) of Fig. 4B shows an image which is captured when a transparent glass plate with no light-transmissive portion is arranged at the front of the imaging device 20. (2) of Fig. 4B shows an image which is captured when a transparent glass plate with light-transmissive portions having certain shape, size, and distribution is arranged at the front of the imaging device 20. Blurring is recognized in the image shown in (2) of Fig. 4B. Meanwhile, blurring is not recognized in the image shown in (1) of Fig. 4B.

The intensity and distribution of diffracted light depend on the shape, size, and distribution of the light-transmissive portions and the wavelength of incident light (external light). When there is little blurring due to diffraction, it is not necessary to perform processing for correcting (compensating for) diffraction for a captured image. When a high-quality captured image is necessary, it is preferable to correct (compensate for) the influence of the diffraction effect.

Fig. 5A shows the image display device 1A of the first embodiment in which the influence of the diffraction effect is corrected from the viewpoint of signal processing.

The image display device 1A of the first embodiment has a control section 90 which controls the operation of the entire device, a display timing controller 92 which controls the display operation of the image display section 10, and an imaging timing controller 94 which controls the imaging operation of the imaging device 20 (imaging section 20a).

The control section 90 supplies display data, a timing signal, or the like to the display timing controller 92. The control section 90 supplies an imaging timing signal, a shutter control signal, a gain control signal, and the like to the imaging timing controller 94.

The display timing controller 92 includes a signal line control circuit (not shown), and the signal line control circuit supplies display data or a horizontal timing signal to the image display section 10 through an image signal supply IC (not shown). The display timing controller 92 includes a scanning line control circuit (not shown), and the scanning line control circuit supplies a vertical timing signal to the image display section 10 through a scanning signal supply IC (not shown).

The image display device 1A of the first embodiment includes a diffraction correction section 100 which, for image information acquired by the imaging device 20, corrects (compensates for) diffraction in the light-transmissive portion 30. When the imaging device 20 (an example of an electronic apparatus) is provided separately from the image display device 1A, as indicated by a one-dot-chain line of the drawing, it is considered that the diffraction correction section 100 (and as occasion demands, the imaging timing controller 94) are arranged in the imaging device 20. The diffraction correction section 100 has an MTF shape storage section 102 and an MTF inverse transform section 104. The MTF inverse transform section 104 has an image storage memory (not shown) and stores captured image data supplied from the imaging device 20 in the image storage memory. The processing operation of the diffraction correction section 100 is controlled by the control section 90.

The control section 90 receives various instructions from the user and controls the operation of the diffraction correction section 100 or other functional sections. For example, as described below in detail, although various procedures are considered as the diffraction correction processing of this embodiment, these procedures have merits and demerits, thus a method may be appropriately selected in accordance with an instruction of the user.

The MTF shape storage section 102 stores MTF shape data regarding the size, shape, and distribution of the light-transmissive portions 30. For example, MTF shape data of the light-transmissive portions 30 obtained the wavelength of external light for each of red (R), green (G), and blue (B) and two-dimensional FFT is stored in the MTF shape storage section 102.

The image information acquired by the imaging device 20 is sent to the MTF inverse transform section 104 which constitutes the diffraction correction section 100. The MTF inverse transform section 104 reads MTF shape data of the light-transmissive portions 30 obtained the wavelength of external light for each of red (R), green (G), and blue (B) and two-dimensional FFT from the MTF shape storage section 102, performs MFT inverse transform, restores an original image, and sends the original image to the control section 90. At this time, in order to simplify calculation and to reduce the processing time, instead of all the signal components, processing may be performed focusing on a part of the signal components. This point will be described below in detail.

The control section 90 carries out various kinds of detection, for example, detection of the line of sight of the user, detection of the motion of the hand of the user, and the like, from the restored image obtained by the diffraction correction section 100 (the MTF inverse transform section 104), and reflects the detection results in display on the image display section 10.

Image display in the image display section 10 is performed under the control of the control section 90. That is, display data, the timing signal, and the like are sent from the control section 90 to the display timing controller 92, display data and the horizontal timing signal are sent from the display timing controller 92 to the signal line control circuit (not shown), and the vertical timing signal is sent to the scanning line control circuit (not shown). In the image display section 10, image display is performed by a known method. Meanwhile, the imaging timing signal, the shutter control signal, the gain control signal, and the like are sent from the control section 90 to the imaging timing controller 94, and the signals are sent from the imaging timing controller 94 to the imaging device 20, such that the operation of the imaging device 20 is controlled.

Fig. 5B shows the image display system 2A of the first embodiment in which the influence of the diffraction effect is corrected from the viewpoint of signal processing. The image display system 2A is different from the image display device 1A shown in Fig. 5A in that the control section 90 and the diffraction correction section 100 are removed from the image display device 1A to constitute an image display device 1A_2, and the removed control section 90 and diffraction correction section 100 are incorporated into the peripheral equipment 70A (an example of an electronic apparatus).

That is, the control section 90 may be provided in the image display device 1A or may be provided in the peripheral equipment 70A, such as a personal computer, which is connected to the image display device 1A_2. The diffraction correction section 100 may be provided in the image display device 1A or may be provided in the peripheral equipment 70A, such as a personal computer, which is connected to the image display device 1A_2.

In the image display device 1A or the image display system 2A, the control function (in particular, a function of controlling the diffraction correction section 100) of the diffraction correction section 100 or the control section 90 can be realized by software, thus a program or a recording medium having stored the program can be extracted as an invention. The same is applied to a case where the measurement result of the wavelength distribution of external light is reflected, improving the precision of the image information acquired by the imaging device (for example, improving the precision of color information) or improving the precision of the MTF inverse transform processing.

That is, in this embodiment, the mechanism of the control configuration in which the diffraction correction processing or wavelength distribution measurement processing and control processing regarding the processing is not limited to a hardware processing circuit and may be realized by software using the mechanism of an electronic computer (computer) on the basis of program codes which realize the function. In the mechanism by software, the processing procedure and the like can be easily changed without being accompanied by hardware changes.

The program may be provided in the form of being stored in a computer-readable storage medium and provided or in the form of being distributed through wired or wireless communication means.

The program is provided in the form of a file in which the program codes for realizing the respective functions regarding the diffraction correction processing or wavelength distribution measurement processing and the control processing regarding the processing are described. In this case, the program may not be provided as a batch program file, and may be provided as individual program modules depending on the hardware configuration of a system which is constituted by a computer.

As specific means of the sections (including the functional blocks) for realizing the respective functions of the diffraction correction processing or wavelength distribution measurement processing and the control processing regarding the processing, hardware, software, communication means, a combination thereof, or other means can be used. This is obvious to those skilled in the art. The functional blocks may be combined and integrated into a single functional block. Software which causes a computer to perform program processing is distributed and installed in accordance with the form of the combination.

The mechanism by software can flexibly cope with parallel processing or continuous processing, but the processing is complicated and the processing time increases, causing degradation in the processing speed. In contrast, if the mechanism is constructed by a hardware processing circuit, even when the processing is complicated, an accelerator system is constructed in which degradation of the processing speed is prevented, high throughput is obtained, and high speed is achieved.

[Countermeasure Principle against Diffraction Effect]

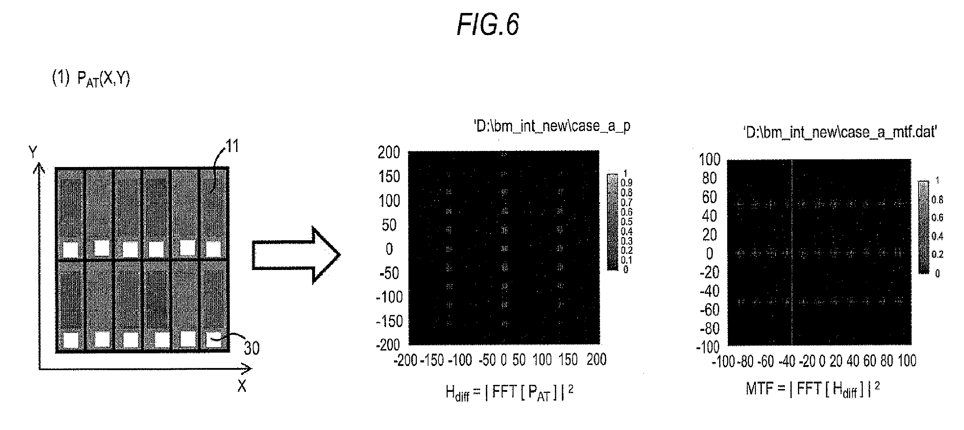

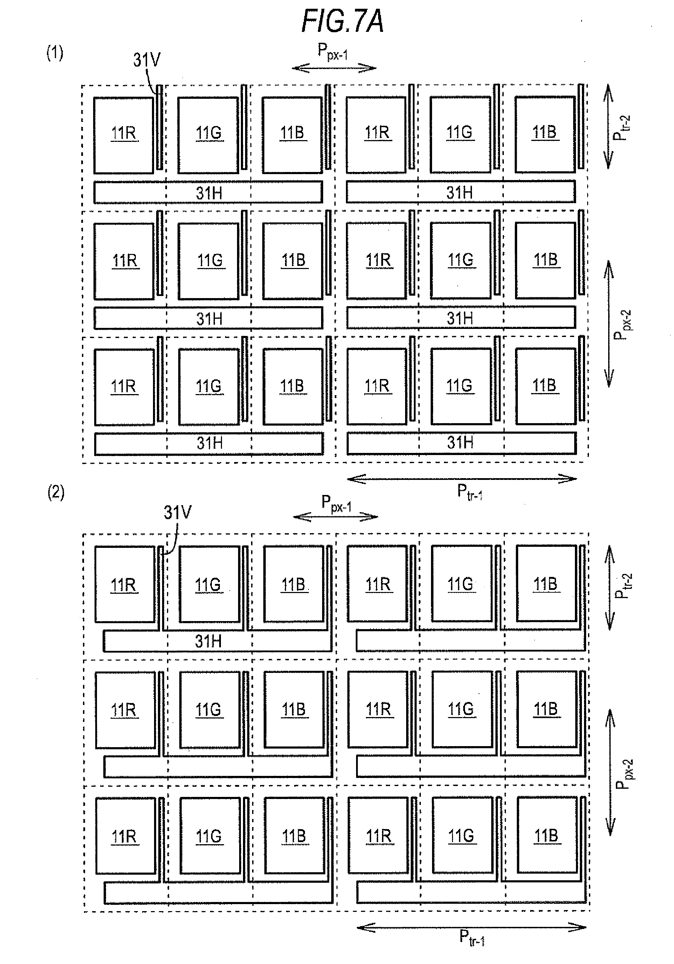

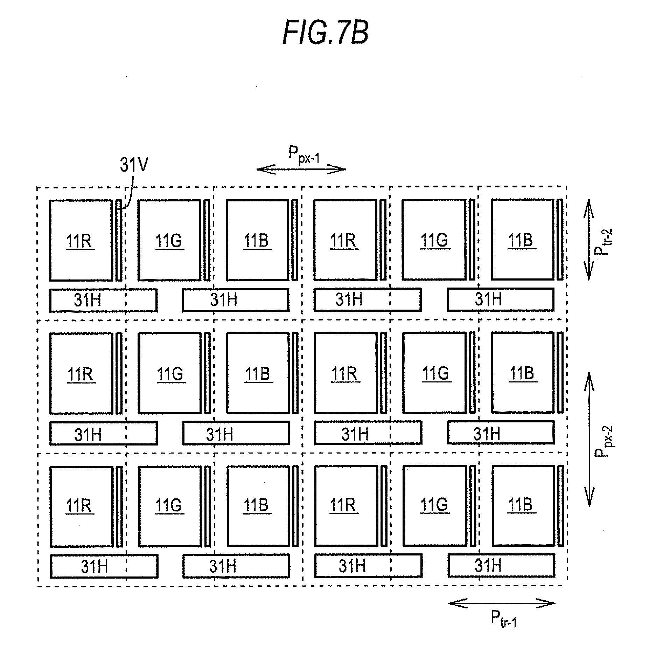

Figs. 6 to 7B are diagrams illustrating a countermeasure against the influence of the diffraction effect from the viewpoint of signal processing. Fig. 6 is a conceptual diagram illustrating diffracted light intensity and MTF obtained from the light-transmissive portion 30 (the opening 65A). Figs. 7A and 7B are diagrams schematically showing an example of the shape of the light-transmissive portion 30 (different from Fig. 1A).

When the pattern shape, size, and the light-transmissive portion 30 and the wavelength of incident light (external light) are determined, a diffraction distribution $P_{diff}$ can be calculated by the following expression (1). In double integration, x and y are integrated from $-\infty$ to $+\infty$.

$$\left.\begin{array}{l} P_{diff}(k_x, k_y) = \iint P_{at}(x, y) \cdot \exp[-j(k_x \cdot x + k_y \cdot y)]dxdy \\ k_x = (2\pi / \lambda)\sin(\theta_x) \\ k_y = (2\pi / \lambda)\sin(\theta_y) \end{array}\right\} \quad (1)$$

Here, $P_{at}(x,y)$ is a two-dimensional pattern on the xy plane of the light-transmissive portion 30 (see (1) of Fig. 6), $\lambda$ is the wavelength of incident light (external light), and $\theta_x$ and $\theta_y$ are diffraction angles in the x direction and the y direction. For simplification of calculation, the value of the wavelength $\lambda$ of incident light (external light) is set to a constant value of 525 nm.

The expression (1) is two-dimensional Fourier transform of $P_{at}(x, y)$, such that fast calculation can be realized by using fast Fourier transform (FFT). Although $P_{diff}(k_x, k_y)$ includes phase information, actually, the imaging device detects diffracted light intensity $H_{diff}(k_x, k_y)$. As expressed by the following expression (2), the diffracted light intensity $H_{diff}(k_x, k_y)$ is the same as the square of the absolute value of $P_{diff}(k_x, k_y)$ (see (2) of Fig. 6).

$$H_{diff}(k_x, k_y) = |P_{diff}(k_x, k_y)|^2 \cdots (2)$$

On an assumption that the spatial resolution of the imaging device 20 is modulated by diffracted light, the MTF (Modulation Transfer Function) is calculated from the expression (3) (see (3) of Fig. 6). "FFT [ ]" means that fast Fourier transform is performed, and "IFFT[]" means that fast inverse Fourier transform is performed.

$$MTF(f_x, f_y) = |FFT[H_{diff}(k_x, k_y)]|^2 \cdots (3)$$

Here, $f_x$ and $f_y$ represent the spatial frequencies in the x direction and the y direction in each imaging element constituting the imaging device 20. The relationship of the following expression (4) is established between an image $I_{cam(x,y)}$ which is obtained by the imaging device 20 through the light-transmissive portion 30 and an original image $I_{real(x,y)}$ not through the light-transmissive portion 30. It is assumed that the image $I_{cam(x,y)}$ is captured R data $R_{cam(x,y)}$ in the case of a red (R) component, is captured G data $G_{cam(x,y)}$ in the case of a green (G) component, and is captured B data $B_{cam(x,y)}$ in the case of a blue (B) component.

$$FFT[I_{cam(x,y)}] = FFT[I_{real(x,y)}] \times MTF(f_x, f_y) \cdots (4)$$

That is, in the spatial frequency domain, the image $I_{cam(x,y)}$ is the product of the original image $I_{real(x,y)}$ and MTF. Thus, in obtaining the original image $I_{real(x,y)}$ from the image $I_{cam(x,y)}$, processing may be performed by the following expression (5). In other words, the MTF inverse transform processing which is calculated on the basis of the shape, size, and distribution of the light-transmissive portions 30 and the wavelength of incident light (external light) (collectively, "MTF shape data") may be performed on the image information. It is assumed that the original image $I_{real(x,y)}$ is a red original image $R_{real(x,y)}$ in the case of a red (R) component, is a green original image $G_{real(x,y)}$ in the case of a green (G) component, and is a blue original image $B_{real(x,y)}$ in the case of a blue (B) component.

$$I_{real(x,y)} = IFFT[FFT[I_{cam(x,y)}] / MTF(f_x, f_y)] \cdots (5)$$

Here, if the size, shape and the distribution of the light-transmissive portions 30 are determined, the result of Fourier transform on the two-dimensional pattern of the light-transmissive portions 30 may be scaled by the wavelength of incident light (external light), making it possible to easily obtain the MTF. The original image can be easily restored from the relationship of the expression (5).

For example, the shape of the light-transmissive portions 30 is shown in (1) and (2) of Fig. 7A or Fig. 7B. A part or all of the light-transmissive portions 30 are provided periodically in the first direction (horizontal direction) and the second direction (vertical direction) of the image display section 10.

In the example shown in (1) of Fig. 7A, a light-transmissive portion 30H which extends from the lower part of the pixel in the first direction (horizontal direction) is provided over one pixel unit which is constituted by three pixels (11R, 11G, and 11B). A light-transmissive portion 30V which extends in the second direction (vertical direction) is provided in each of the pixels 11R, 11G, and 11B, and is provided between the pixels. In the example shown in (2) of Fig. 7A, the light-transmissive portion 30H and the light-transmissive portion 30 are connected to each other. In the example of Fig. 7B, the light-transmissive portion 30H is provided over one pixel unit which is constituted by three pixels (11R, 11G, and 11B). Unlike (1) of Fig. 7A, the light-transmissive portion 30H is constituted by two portions.

When the length of the light-transmissive portion 30 in the first direction is $L_{tr-1}$ and the pitch of the pixels 11 in the first direction is $P_{px-1}$, the linear opening rate $L_{tr-1}/P_{px-1}$ in the first direction satisfies the relationship "$L_{tr-1}/P_{px-1} \geq 0.5$". When the length of the light-transmissive portion 30 in the second direction is $L_{tr-2}$ and the pitch of the pixels 11 in the second direction is $P_{px-2}$, the linear opening rate $L_{tr-2}/P_{px-2}$ in the second direction satisfies the relationship "$L_{tr-2}/P_{px-2} \geq 0.5$". This can be described from the definition of the MTF.

As expressed by the following expression (6) which is derived from the expressions (2) and (3), the MTF is obtained by raising the diffraction distribution obtained from the two-dimensional pattern $P_{at\,(x,\,y)}$ on the xy plane of the light-transmissive portion 30 to the second power, performing fast Fourier transform, and further raising the result to the second power.

$$MTF\ (f_x,\ f_y) = |\ FFT\ [\,|\ P_{diff}\ (k_x,\ k_y)\ |^2\,]\ |^2 \quad \cdots (6)$$

From the so-called Wiener-Khinchin theorem, Fourier transform of a self-correlation function is equal to a power spectrum, such that the MTF is equal to the square of the absolute value of the self-correlation function of the diffraction distribution in the light-transmissive portions 30. The condition that there is no point where the self-correlation function has no correlation in the spatial frequency domain (that is, a point where the MTF becomes 0) is "$L_{tr-1}/P_{px-1} \geq 0.5$" and "$L_{tr-2}P_{px-2} \geq 0.5$". When there is no point where the MTF becomes 0, the expression (5) does not have a singular point, thus the original image is easily reproduced. For this reason, it is preferable that the condition that the value of the linear opening rate $L_{tr-1}P_{px-1}$ in the first direction and the value of the linear opening rate $L_{tr-2}/P_{px-2}$ in the second direction are equal to or greater than 0.5 is satisfied.

<Second Embodiment>

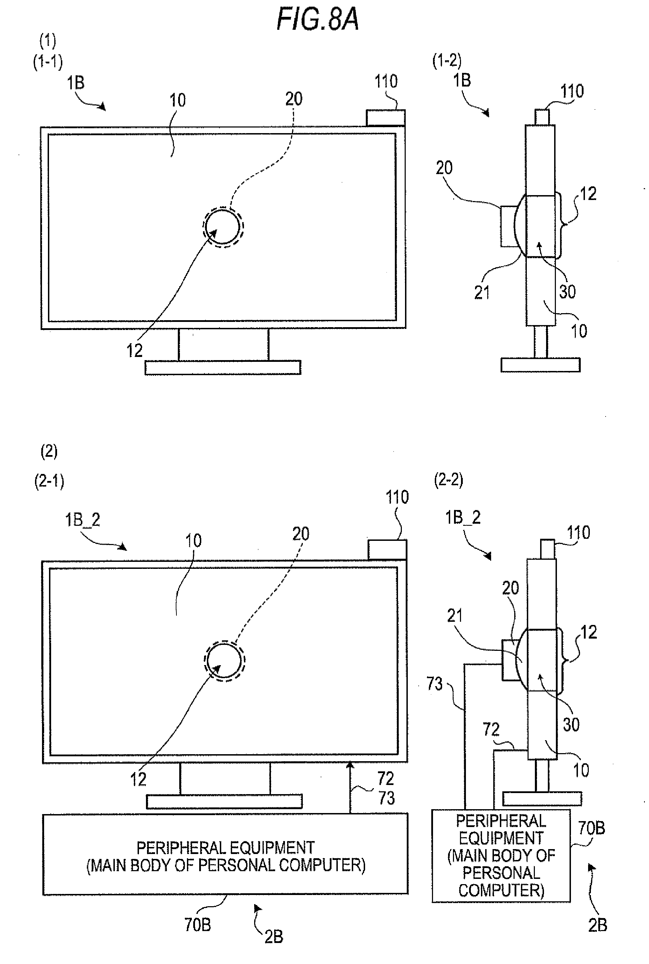

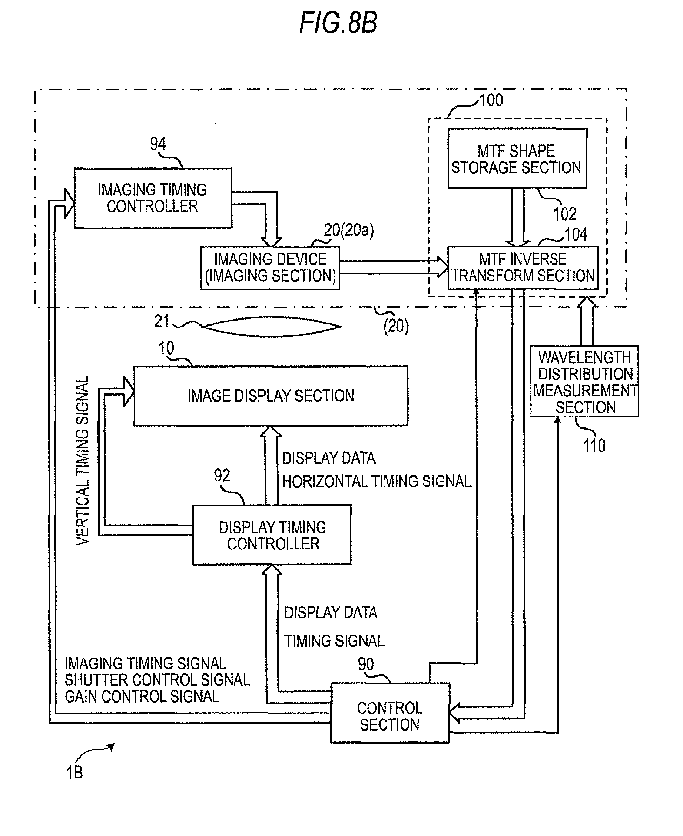

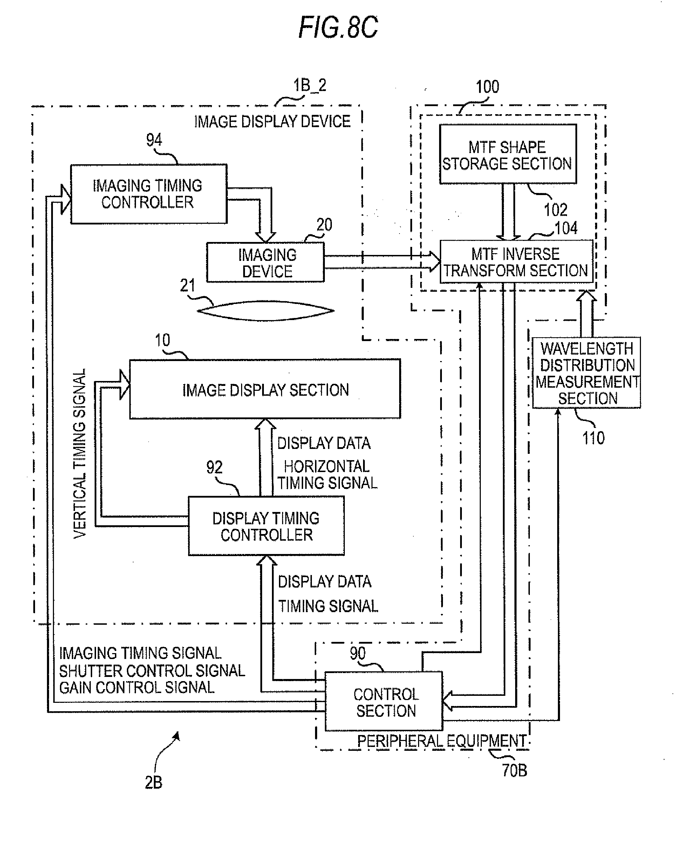

Figs. 8A to 8C are diagram illustrating an image display device and an image display system of a second embodiment. Fig. 8A is a diagram illustrating the concept of the image display device and the image display system of the second embodiment. (1) of Fig. 8A is a conceptual diagram of the image display device, and (2) of Fig. 8A is a conceptual diagram of the image display system. (1-1) of Fig. 8A is a conceptual diagram when the image display device is viewed from the front surface, and (1-2) of Fig. 8A is a conceptual diagram when the image display device is viewed from the lateral surface. (2-1) of Fig. 8A is a conceptual diagram when the image display system is viewed from the front surface, and (2-2) of Fig. 8A is a conceptual diagram when the image display system is viewed from the lateral surface. Fig. 8B is a block diagram of an image display device 1B of the second embodiment in which wavelength distribution measurement is enabled. Fig. 8C is a block diagram of an image display system 2B of the second embodiment in which wavelength distribution measurement is enabled.

As shown in (1) of Fig. 8A, the image display device 1B of the second embodiment includes a wavelength distribution measurement section 110 which measures the wavelength distribution of external light, in addition to the configuration of the image display device 1A of the first embodiment. The wavelength distribution measurement section 110 may be detachably provided in the image display device 1B. Although in this example, the wavelength distribution measurement section 110 is arranged at the upper part of the panel of the image display section 10, this is just an example, and the wavelength distribution measurement section 110 may be provided anywhere insofar as the wavelength distribution of external light can be measured.

As shown in (2) of Fig. 8A, an image display system 2B of the second embodiment further includes the wavelength distribution measurement section 110 which measures the wavelength distribution of external light, in addition to the configuration of the image display system 2A of the first embodiment. Information acquired by the wavelength distribution measurement section 110 is supplied to the diffraction correction section 100. The wavelength distribution measurement section 110 may be arranged anywhere in the periphery of the image display device 1B_2 insofar as the wavelength distribution of external light can be measured.

The wavelength distribution measurement section 110 is constituted by, for example, a set of a photosensor with a red filter, a photosensor with a green filter, and a photosensor with a blue filter.

As shown in Fig. 8B, in the image display device 1B, the control section 90 controls the measurement operation of the wavelength distribution measurement section 110. Information acquired by the wavelength distribution measurement section 110 is supplied to the diffraction correction section 100. As shown in Fig. 8C, in the image display system 2B, the control section 90 which is incorporated in the peripheral equipment 70B controls the measurement operation of the wavelength distribution measurement section 110.

As described in the first embodiment, the expression (1) which calculates the diffraction distribution $P_{diff}\ (k_x\,k_y)$

on the xy plane of the light-transmissive portion 30 includes the wavelength $\lambda$ of incident light (external light). Therefore, with the measurement of the wavelength distribution, the MTF at each wavelength can be optimized in accordance with the external environment, diffraction can be more accurately corrected or compensated for, and a higher-quality captured image can be obtained.

The wavelength distribution measurement section 110 is provided, such that it is possible to obtain the wavelength distribution (optical spectrum) of external light. The obtained wavelength distribution of external light is multiplied to the spectral spectrum of the imaging device 20, thereby obtaining wavelength distribution of each primary color (red, green, blue) of the captured image. An image subjected to the MTF inverse transform processing for each wavelength is weighted with the wavelength distribution of the captured image, thereby more accurately correcting or compensating for diffraction.

In the second embodiment, with this configuration, it is possible to more accurately correct or compensate for diffraction and to improve the precision of the image information acquired by the imaging device 20 (for example, to improve the precision of color information).

Although there is no direct relation with the mechanism of this embodiment, when there is a little blurring due to diffraction, it is not necessary to perform processing for correcting (compensating for) diffraction for the captured image. Even in this case, however, the wavelength distribution measurement section 110 which measures the wavelength distribution of external light is further provided, such that the diffraction correction section 100 can weight the image acquired by the imaging device 20 with the wavelength distribution of the captured image. As a result, it is possible to improve the precision of the image information acquired by the imaging device 20.

<Diffraction Correction Processing: first example (all signal components) >

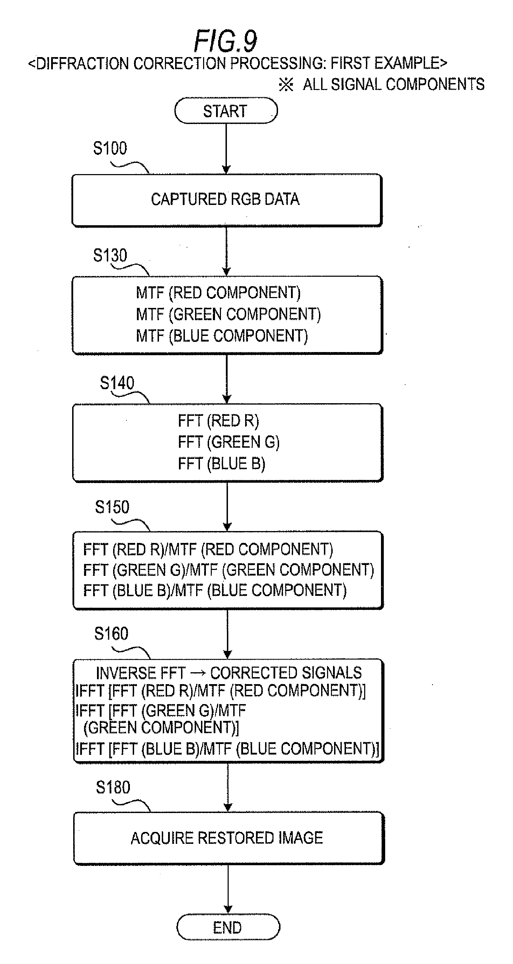

Fig. 9 is a diagram (flowchart) showing a first example of diffraction correction processing in the diffraction correction section 100. The diffraction correction processing of the first example refers to a method in which the respective signal components constituting image information to be acquired by the imaging device 20 are processed. As an example, it is assumed that color image data of R, G, and B (captured R data, captured G data, captured B data: collectively, captured RGB data) is supplied as captured data from the imaging device 20 to the MTF inverse transform section 104 of the diffraction correction section 100 (S100). The MTF inverse transform section 104 stores captured image data supplied from the imaging device 20 in the image storage memory.

The MTF inverse transform section 104 performs the MTF inverse transform processing, which is calculated on the basis of the shape, size, and distribution of the light-transmissive portions 30 and the wavelength of incident light (external light), on color image data of R, G, and B by the expression (5).

For example, the MTF inverse transform section 104 obtains the MTF by the expressions (2) and (3) for each color of R, G, and B (S130). Specifically, the diffracted light intensity $H_{diff}(k_x, k_y)$ is detected for each color of R, G, and B, and the MTF is calculated by the expression (3) for each color of R, G, and B. It is assumed that the MTFs for R, G, and B are respectively MTF (red component), MTF (green component), and MTF (blue component).

The MTF inverse transform section 104 performs fast Fourier transform on captured data for each color of R, G, and B (captured R data, captured G data, captured B data) acquired by the imaging device 20 through the light-transmissive portions 30 to obtain FFT[] for each color (S140). Specifically, fast Fourier transform is performed on each of captured R data $R_{cam (x, y)}$, captured G data $G_{cam(x,y)}$, and captured B data $B_{cam (x, y)}$ captured by the imaging device 20 through the light-transmissive portions 30 to obtain FFT $[R_{cam (x, y)}]$, FFT $[G_{cam(x, y)}]$ , and FFT$[B_{cam(x, y)}]$.

The MTF inverse transform section 104 divides FFT[] for each color of R, G, and B obtained in Step S140 by the MTF of the corresponding color obtained in Step S130 (S150). Specifically, FFT $[R_{cam(x,y)}]$ /MTF (red component), FFT $[G_{cam(x,y)}]$ /MTF (green component) , and FFT $[B_{cam(x,y)}]$ /MTF (blue component) are obtained.

The MTF inverse transform section 104 performs fast inverse Fourier transform on the division result for each color of R, G, and B obtained in Step S150 to restore the original image $I_{real (x, y)}$ for each color (S160). Specifically, on the basis of the expression (5), the red original image $R_{real (x, y)}$ is acquired by IFFT$[$FFT$[R_{cam(x, y)}]$/MTF (red component)$]$, the green original image $G_{real(x, y)}$ is acquired by IFFT$[$FFT$[G_{cam(x, y)}]$/MTF (green component)$]$, and the blue original image $B_{real (x, y)}$ is acquired by IFFT $[$FFT $[B_{cam (x, y)}]$ /MTF (blue component)$]$.

The MTF inverse transform section 104 acquires (displays on the image display section 10) a restored color image on the basis of the red original image $R_{real (x, y)}$, the green original image $G_{real (x, y)}$, and the blue original image $B_{real (x, y)}$ restored for R, G, and B in Step S160 (S180).

In the diffraction correction processing of the first example, the MTF inverse transform processing is performed on the respective signal components of R, G, and B constituting the image information. Thus, the processing load is imposed, but a high correction effect is obtained compared to processing focusing on a part of the signal components, making it possible to correct unsharpness in the captured image because of the diffraction effect with precision.

<Diffraction Correction Processing: second example (all signal components & color conversion) >

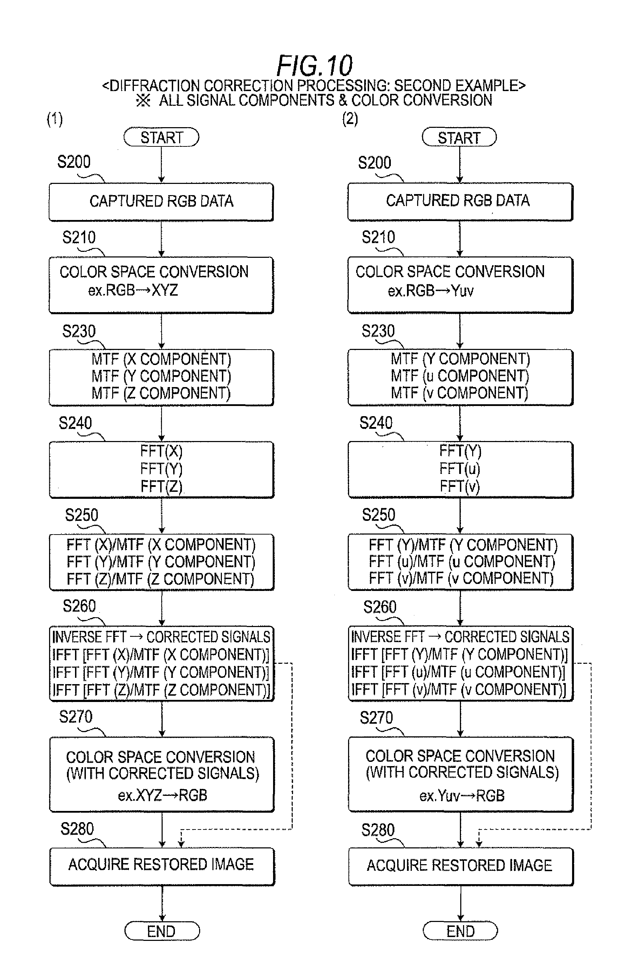

Fig. 10 is a diagram (flowchart) illustrating a second example of diffraction correction processing in the diffraction correction section 100. The diffraction correction processing of the second example refers to a method in which the color space of captured image of each component constituting the image information acquired by the imaging device 20 is converted, and each piece of image data after conversion is processed. Hereinafter, description will be provided focusing on a difference from the first example. The processing steps are represented by 200s, and the same processing steps as those in the first example are represented by 10s and 1s.

The MTF inverse transform section 104 converts captured R data, captured G data, and captured B data of the RGB color space acquired in Step S200 to image data of another color space (for example, XYZ color space or Yuv color space) (S210).

The MTF inverse transform section 104 performs the MTF inverse transform processing, which is calculated on the basis of the shape, size, and distribution of the light-transmissive portion 30 and the wavelength of incident light (external light), on each piece of data after color conversion acquired in Step S210 by the expression (5). Color conversion may be carried out on an assumption that there is at least a signal component including luminance information. (1) of Fig. 10 shows a case where the RGB color space is converted to the XYZ color space, and (2) of Fig. 10 shows a case where the RGB color space is converted to the Yuv color space. Hereinafter, description will be provided assuming that the RGB color space is converted to the XYZ color space.

For example, the MTF inverse transform section 104 obtains the MTF by the expressions (2) and (3) for each piece of image data of X, Y, and Z (S230). Specifically, the diffracted light intensity $H_{diff}$ $(k_x, k_y)$ for each of X, Y, and Z is detected, and the MTF is calculated by the expression (3) for each of X, Y, and Z. It is assumed that the MTFs for X, Y, and Z are respectively MTF (X component), MTF (Y component), and MTF (Z component).

The MTF inverse transform section 104 performs fast Fourier transform on image data (converted X data, converted Y data, converted Z data) for each of X, Y, and Z after color space conversion to obtain FFT[] for each of X, Y, and Z (S240). Specifically, fast Fourier transform is performed on converted X data $X_{cam(x, y)}$, converted Y data $Y_{cam(x, y)}$, and converted Z data $Z_{cam\,(x, y)}$ to obtain FFT $[X_{cam\,(x, y)}]$, FFT $[Y_{cam(x, y)}]$, and FFT $[Z_{cam(x, y)}]$.

The MTF inverse transform section 104 divides FFT[] obtained in Step S240 by the MTF of a corresponding signal component obtained in Step S230 for each of X, Y, and Z (S250). Specifically, FFT $[X_{cam(x, y)}]$ /MTF (X component), FFT$[Y_{cam(x, y)}]$/MTF (Y component), and FFT $[Z_{cam(x, y)}]$ /MTF (Z component) are obtained.

The MTF inverse transform section 104 performs fast inverse Fourier transform on the division result for each of X, Y, and Z obtained in Step S250 to restore the original image $I_{real(x, y)}$ for each of X, Y, and Z (S260). Specifically, on the basis of the expression (5), an X original image $X_{real(x, y)}$ is acquired by IFFT[FFT[$X_{cam(x, y)}$]/MTF (X component)], a Y original image $Y_{real(x, y)}$ is acquired by IFFT[FFT[$Y_{cam(x, y)}$]/MTF (Y component)], and a Z original image $Z_{real(x, y)}$ is acquired by I FFT [FFT [$Z_{cam(x, y)}$]/MTF (Z component)].

The MTF inverse transform section 104 returns the X original image $X_{real(x, y)}$, the Y original image $Y_{real(x, y)}$, and the Z original image $Z_{real(x, y)}$ restored for X, Y, and Z in Step S260 to the original image of the RGB color space, that is, carries out conversion to image data of the RGB color space (S270). Thus, the red original image $R_{real(x, y)}$, the green original image $G_{real(x, y)}$, and the blue original image $B_{real(x, y)}$ are restored.

The MTF inverse transform section 104 acquires the restored color image on the basis of the red original image $R_{real(x, y)}$, the green original image $G_{real(x, y)}$, and the blue original image $B_{real(x, y)}$ restored for R, G, and B in Step S270 (S280). The color conversion processing of Step S270 may be omitted, and the restored color image may be directly acquired.

Since the diffraction correction processing of the second example is accompanied by the color conversion processing, the processing load is imposed, but the luminance component and the color component are divided and subjected to the diffraction correction processing, having an advantage of varying the correction coefficient between the luminance component and the color component. The MTF inverse transform processing is performed on the respective signals constituting the image information, such that it is possible to obtain a high correction effect compared to processing focusing on a part of the signals and to correct unsharpness in the captured image due to the diffraction effect with precision. For example, when an image is represented by signals of three (for example, R, G, and B) color components, the correction processing of the second example is performed, such that the correction coefficient becomes about 0.8 times (0.2 is the loss due to the color conversion processing).

<Diffraction Correction Processing: third example (specific signal-focused processing: green having strong correlation with luminance signal component) >

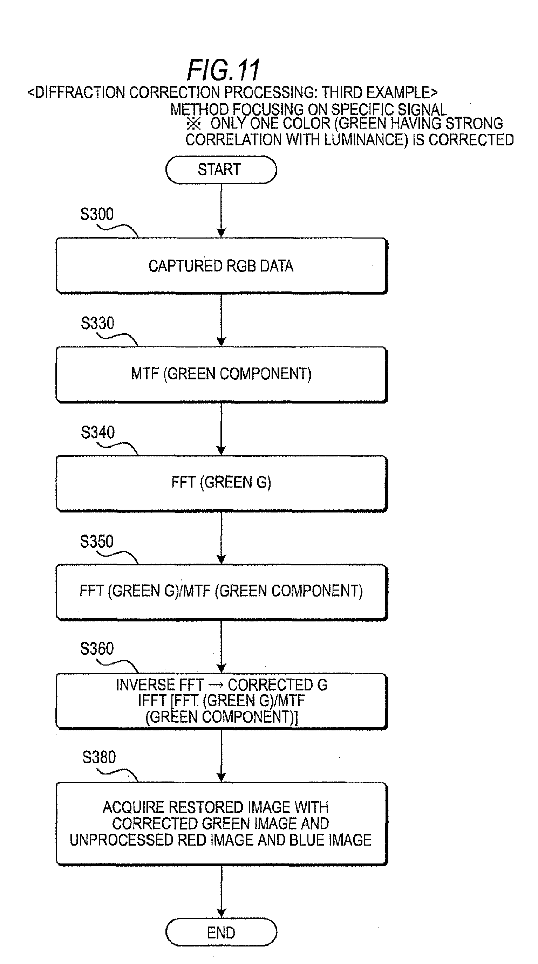

Fig. 11 is a diagram (flowchart) illustrating a third example of diffraction correction processing in the diffraction correction section 100. The diffraction correction processing of the third example refers to a method in which processing is performed on at least a part (not all) of a plurality of signal component constituting the image information to be acquired by the imaging device 20. Hereinafter, it is assumed that processing is performed focusing on only one of a plurality of colors (for example, R, G, and B, or X, Y, and Z or Y, u, and v after color conversion) constituting the image information. Hereinafter, description will be provided focusing on a difference from the first example. The processing steps are represented by 300s, and the same processing steps as those in the first example are represented by 10s and 1s.

The MTF inverse transform section 104 performs the MTF inverse transform processing, which is calculated on the basis of the shape, size and distribution of the light-transmissive portion 30 and the wavelength of incident light (external light), on only one color of R, G, and B by the expression (5). That is, the diffraction correction processing is performed on only one color. At this time, it is preferable that processing is performed focusing on the green image information having a relatively strong correlation with the luminance signal component, that is, the diffraction correction processing is performed on green having a strong correlation with the luminance signal component.

For example, the MTF inverse transform section 104 obtains the MTF of the G color by the expressions (2) and (3) (S330). Specifically, the diffracted light intensity $H_{diff}(k_x, k_y)$ of the G color is detected, and the MTF (green component) of the G color is calculated by the expression (3).

The MTF inverse transform section 104 performs fast Fourier transform on captured G data of the G color acquired by the imaging device 20 through the light-transmissive portion 30 to obtain FFT [] of the G color (S340). Specifically, fast Fourier transform is performed on captured G data $G_{cam(x, y)}$ captured by the imaging device 20 through the light-transmissive portion 30 to obtain FFT $[G_{cam(x, y)}]$.

The MTF inverse transform section 104 divides FFT$[G_{cam(x, y)}]$ obtained in Step S340 by the MTF (green component) of the G color obtained in Step S330 for the G color to obtain FFT $[G_{cam(x, y)}]$/MTF (green component) (S350).

The MTF inverse transform section 104 performs fast inverse Fourier transform on the division result obtained in Step S350 for the G color to restore the original image $G_{real(x, y)}$ for the G color (S360). Specifically, on the basis of the expression (5), the green original image $G_{real(x, y)}$ is acquired by IFFT [FFT $[G_{cam(x, y)}]$/MTF (green component)].

The MTF inverse transform section 104 acquires the restored color image on the basis of the green original image $G_{real (x, y)}$ restored for the G color in Step S360 and unprocessed captured R data $R_{cam (x, y)}$ of the R color and captured B data $B_{cam(x, y)}$ of the B color (S380).

In the diffraction correction processing of the third example, the MTF inverse transform processing is performed on at least one (not all colors) of R, G, and B constituting the image information. Thus, the correction effect is inferior to the first example or the second example where all the signal components are processed, but the processing load is reduced, and high-speed diffraction correction processing is achieved. For example, when an image is represented by signals of three (for example, R, G, and B) color components, processing is performed focusing on one color, such that the correction speed becomes three times.

Although in the third example, it is considered that processing is performed focusing on the R color or the B color, it is preferable that processing is performed focusing on the green image information having a relatively strong correlation with the luminance signal component. Thus, it is confirmed that the correction effect comparable to the first example or the second example where all the signal components are processed is obtained. The diffraction correction processing with a satisfactory balance from the viewpoint of both the correction effect and the processing load is realized. In comparison with a fourth example described below, the color conversion processing is not performed, such that the processing load is reduced compared to the fourth example.

When the processing procedure of the third example shown in Fig. 11 is applied to the second example, it should suffice that the processing steps corresponding to the color conversion processing (S210 and S270) are further provided, and processing is performed focusing on the luminance signal component. In this case, with regard to the MTF, the MTF (Y component) is specified, and fast inverse Fourier transform is performed on FFT$[Y_{cam(x, y)}]$ /MTF. (Y component). In comparison with the fourth example described below, fast inverse Fourier transform is truly performed on the luminance signal component Y. Thus, the processing load increases compared to the fourth example, but the correction effect increases compared to the fourth example since fidelity is secured from the viewpoint of focusing on the luminance signal component. For example, when an image is represented by signals of three (for example, R, G, and B) color components, the correction speed becomes about 2.5 times, not three times (0.5 is the loss due to the color conversion processing).

<Diffraction Correction Processing: fourth example (specific signal-focused processing: luminance signal component) >

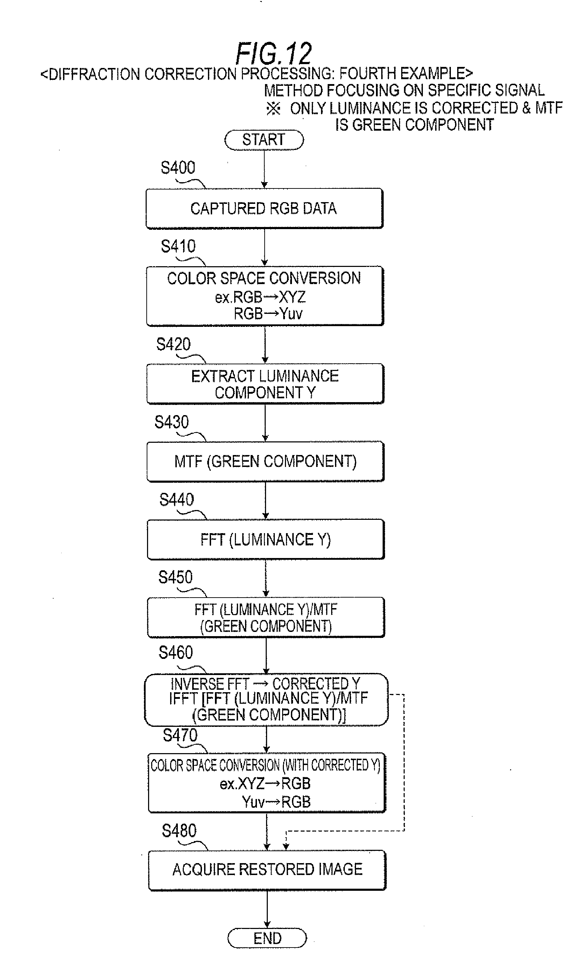

Fig. 12 is a diagram (flowchart) illustrating a fourth example of diffraction correction processing in the diffraction correction section 100. The diffraction correction processing of the fourth example refers to a method in which the color space of captured data of each component constituting the image information acquired by the imaging device 20 is converted, and processing is performed on at least one (not all) of a plurality of image data after color conversion. Hereinafter, it is assumed that processing is performed focusing on one of a plurality (for example, X, Y, and Z or Y, u, and v) of pieces of color-converted image data. Hereinafter, description will be provided focusing on a difference from the second example. The processing steps are represented by 400s, and the same processing steps as those in the second example are represented by 10s and 1s.

The MTF inverse transform section 104 performs the MTF inverse transform processing, which is calculated on the shape, size, and distribution of the light-transmissive portions 30 and the wavelength of incident light (external light), on one of a plurality of pieces of image data after color conversion acquired in Step S410 by the expression (5), that is, performs the diffraction correction processing on only one signal component. At this time, it is preferable that processing is performed focusing on the luminance signal component, that is, the luminance signal component is extracted from a plurality of pieces of image data after color conversion, and the diffraction correction processing is performed on only the luminance signal component with reference to the green image information having a relatively strong correlation with the luminance signal component. Hereinafter, description will be provided assuming that the RGB color space is converted to the XYZ color space.

For example, the MTF inverse transform section 104 obtains the MTF of the luminance signal component Y by the expressions (2) and (3) (S430). Specifically, the diffracted light intensity $H_{diff}(k_x, k_y)$ of the G color is detected, and the MTF (green component) of the G color is calculated by the expression (3).

The MTF inverse transform section 104 performs fast Fourier transform on image data (converted Y data) of the luminance signal component Y extracted from XYZ data after color conversion to obtain FFT[] of the luminance signal component Y (S440). Specifically, fast Fourier transform is performed on converted Y data $Y_{cam(x, y)}$ to obtain $FFT[Y_{cam(x, y)}]$.

The MTF inverse transform section 104 divides FFT $[Y_{cam(x, y)}]$ obtained in Step S440 by the MTF (green component) of the G color obtained in Step S430 for the luminance signal component Y to obtain $FFT[Y_{cam(x, y)}]$/MTF (green component) (S450).

The MTF inverse transform section 104 performs fast inverse Fourier transform on the division result obtained in Step S450 for the luminance signal component Y to restore the original image $Y_{real(x, y)}$ for the luminance signal component Y (S460). Specifically, on the basis of the expression (5), the green original image $Y_{real(x, y)}$ is acquired by $IFFT[FFT[Y_{cam(x, y)}]$/MTF (green component)].

The MTF inverse transform section 104 returns the original image $Y_{real(x, y)}$ restored for the luminance signal component Y in Step S460 and unprocessed converted X data $X_{cam(x, y)}$ and converted Z data $Z_{cam(x, y)}$ to the original image of the RGB color space, that is, carries out conversion to image data of the RGB color space (S470). Thus, the red original image $R_{real(x, y)}$, the green original image $G_{real(x, y)}$, and the blue original image $B_{real(x, y)}$ are restored.

The MTF inverse transform section 104 acquires the restored color image on the basis of the red original image $R_{real(x, y)}$, the green original image $G_{real(x, y)}$, and the blue original image $B_{real(x, y)}$ restored for the respective colors of R, G, and B in Step S470 (S480). The color conversion processing of Step S470 may be omitted, and the restored color image may be directly acquired.

Since the diffraction correction processing of the fourth example is accompanied by the color conversion processing, the processing load is imposed, but the MTF inverse transform processing is performed on at least one (not all) of the signal components after color conversion, having an advantage of reducing the processing load compared to a case where all the signal components are processed. Thus, the correction effect is inferior to a case where all the signal components are processed, but the processing load tends to be reduced as a whole, and a high-speed diffraction correction processing is achieved.

In the fourth example, if the the luminance signal component is focused, and the diffraction correction processing is performed on only the luminance signal component with reference to the green image information having a relatively strong correlation with the luminance signal component, it is confirmed that the correction effect comparable to a case where all the signal components are processed is obtained. The diffraction correction processing with a satisfactory balance from the viewpoint of both the correction effect and the processing load is realized.

In the fourth example, with regard to the MTF, the MTF (G component) is specified, and fast inverse Fourier transform is performed on $FFT[Yc_{am(x, y)}]$/MTF (green component). Thus, fidelity is inferior to the third example from the viewpoint of focusing on the luminance signal component, but the processing load is reduced compared to the third example because the MTF (Y component) is not obtained and is substituted with the MTF (green component). For example, when an image is represented by signals of three (for example, R, G, and B) color components, with the correction processing of the fourth example, the correction speed becomes about 2.8 times, not three times (there is an improvement by 0.3 compared to the third example).

[Assembling of First Example to Fourth Example]

As understood from the above description, in the diffraction correction processing of this embodiment, various procedures of the first example to the fourth example are taken into consideration, but these procedures have merits and demerits from the viewpoint of the processing speed and the correction precision. Thus, it is preferable that the user can appropriately select a method.

<Modification of Light-Transmissive Portion>

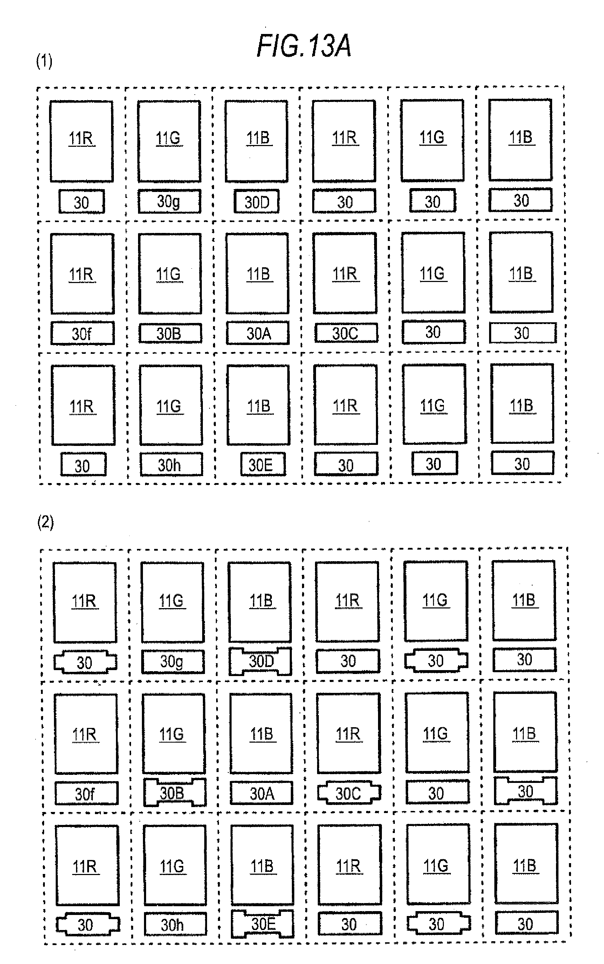

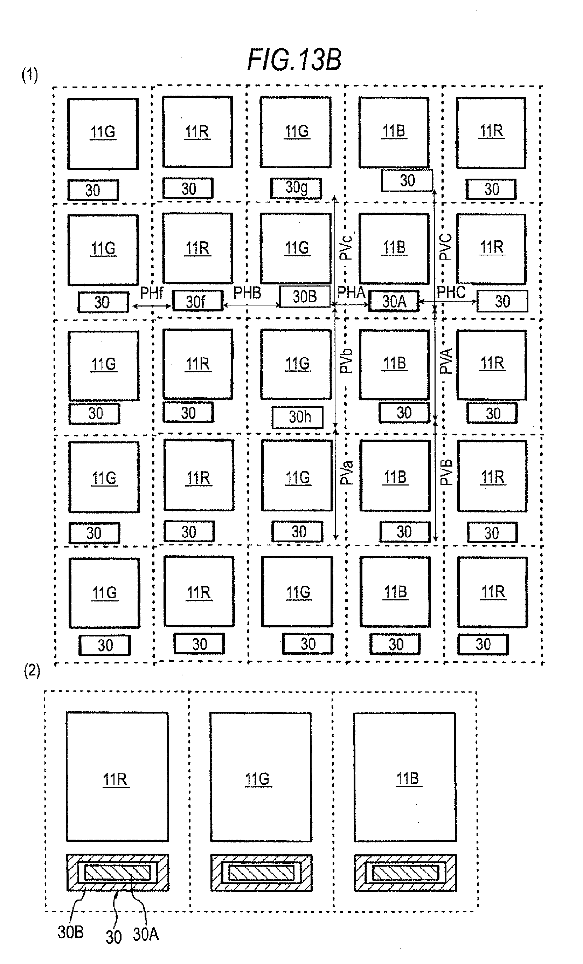

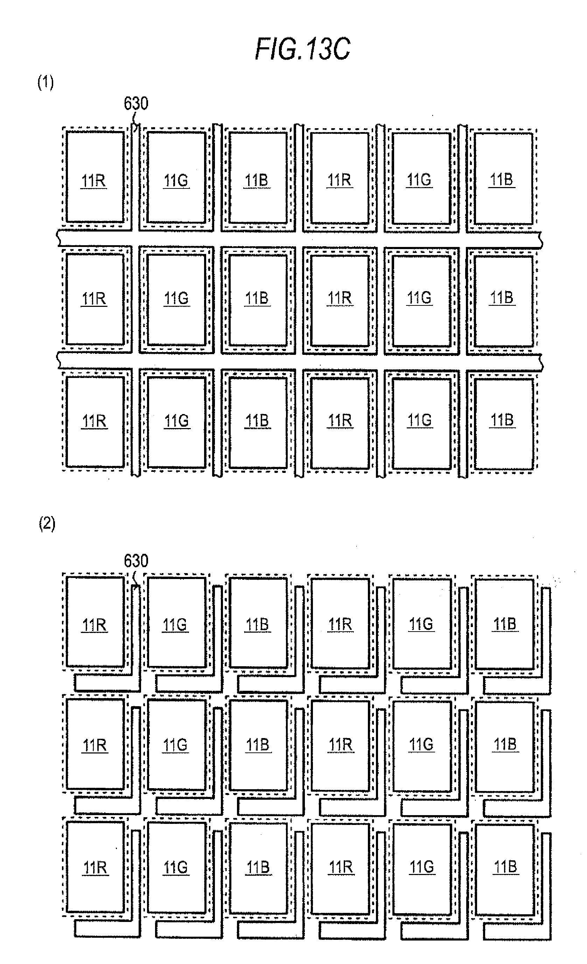

Figs. 13A to 13C are diagrams showing a modification of the light-transmissive portions 30 of the light-transmissive region 12. Fig. 13A and (1) of Fig. 13B show a first modification, (2) of Fig. 13B shows a second modification, and Fig. 13C shows a third modification. In Fig. 13A and (1) of Fig. 13B, for simplification of the drawings, in all of the light-transmissive portions 30, each of four light-transmissive portions 30 adjacent to one light-transmissive portion 30 is not different in size from the one light-transmissive portion 30.

[First Modification]

When the light-transmissive portion 30 is very small, the diffraction effect occurs in the light-transmissive portion 30. As a result, blurring may occur in an image formed on the imaging device 20, and sharpness may be lacking. Accordingly, in the first modification or second modification, the size, shape, distribution (arrangement pitch, arrangement position relationship, or the like), and the like of the light-transmissive portions are contrived in advance so as to suppress the occurrence of the diffraction effect. The first modification (and a second modification described below) is based on this viewpoint.

In the first modification shown in Fig. 13A and (1) of Fig. 13B, the state of the light-transmissive portions 30 of the light-transmissive region 12 is made random. Specifically, at least one of the size, shape, and distribution of the light-transmissive portions 30 is made random.

When the size of a plurality of light-transmissive portions 30 is made random, it is preferable that at least two light-transmissive portions 30 adjacent to one light-transmissive portion 30A to be focused in the horizontal direction or the vertical direction are different in size from the light-transmissive portion 30A. That is, two light-transmissive portions 30 in the horizontal direction and/or the vertical direction of the light-transmissive portion 30A, more preferably, three light-transmissive portions 30 adjacent to the light-transmissive portion 30A, and still more preferably, four light-transmissive portions 30 adjacent to the light-transmissive portion 30A are different in size from the light-transmissive portion 30A.

In the example of Fig. 13A, 6×3=18 light-transmissive portions 30 are provided in the light-transmissive region 12, the one light-transmissive portion 30 to be focused is the light-transmissive portion 30A, two light-transmissive portions 30 adjacent to the light-transmissive portion 30A in the horizontal direction are a light-transmissive portion 30B and a light-transmissive portion 30C, and two light-transmissive portions 30 adjacent to the light-transmissive portion 30A in the vertical direction are a light-transmissive portion 30D and a light-transmissive portion 30E. A light-transmissive portion 30 other than the light-transmissive portion 30A adjacent to the light-transmissive portion 30B in the horizontal direction is a light-transmissive portion 30f, and two light-transmissive portions 30 adjacent to the light-transmissave portion 30B in the vertical direction are a light-transmissive portion 30g and a light-transmissive portion 30h.

As schematically shown in (1) of Fig. 13A, in all the 18 light-transmissive portions 30, each of four other light-transmissive portions 30 adjacent to one light-transmissive portion 30 is different in size from the one light-transmissive portion 30. In (1) of Fig. 13A, focusing on the light-transmissive portion 30A, each of the two light-transmissive portions 30B and 30C adjacent to the light-transmissive portion 30A in the horizontal direction and the two light-transmissive portions 30D and 30E adjacent to the light-transmissive portion 30A in the vertical direction is different in size from the light-transmissive portion 30A. Focusing on the light-transmissive portion 30B, each of the two light-transmissive portions 30A and 30f adjacent to the light-transmissive portion 30B in the horizontal direction and the two light-transmissive portions 30g and 30h adjacent to the light-transmissive portion 30B in the vertical direction is different in size from the light-transmissive portion 30B. Thus, it is possible to avoid the occurrence of the diffraction effect in the light-transmissive region 12.

When the shape of a plurality of light-transmissive portion 30 is made random, it is preferable that at least two light-transmissive portions 30 adjacent to one light-transmissive portion 30A to be focused in the horizontal direction or the vertical direction is different in shape from the one light-transmissive portion 30A. That is, two light-transmissive portions 30 adjacent to the light-transmissive portion 30A in the horizontal direction and/or the vertical direction, more preferably, three light-transmissive portions 30 adjacent to the light-transmissive portion 30A, and still more preferably, four light-transmissive portions 30 adjacent to the light-transmissive portion 30A are different in shape from the light-transmissive portion 30A.

For example, as schematically shown in (2) of Fig. 13A, in all of the 18 light-transmissive portions 30, each of four other light-transmissive portions 30 adjacent to one light-transmissive portion 30 is different in shape from the one light-transmissive portion 30. In (2) of Fig. 13A, focusing on the light-transmissive portion 30A, each of two light-transmissive portions 30B and 30C adjacent to the light-transmissive portion 30A in the horizontal direction and two light-transmissive portions 30D and 30E adjacent to the light-transmissive portion 30A in the vertical direction is different in shape from the light-transmissive portion 30A. Focusing on the light-transmissive portion 30B, each of two light-transmissive portions 30A and 30f adjacent to the light-transmissive portion 30B in the horizontal direction and two light-transmissive portions 30g and 30h adjacent to the light-transmissive portion 30B in the vertical direction is different in shape from the light-transmissive portion 30B. Thus, it is also possible to avoid the occurrence of the diffraction effect in the light-transmissive portions 30.

When the distribution of a plurality of light-transmissive portion 30 is made random, it is preferable that the arrangement position relationship of at least two light-transmissive portions 30 adjacent to one light-transmissive portion 30A to be focused in the horizontal direction or the vertical direction is different from the arrangement position relationship in the same relationship as the light-transmissive portion 30A with respect to the light-transmissive portions 30 adjacent to the light-transmissive portion 30A in the horizontal direction and/or the vertical direction. In other words, each of at least two arrangement pitches adjacent to one arrangement pitch to be focused in the horizontal direction and/or the vertical direction is different from the one arrangement pitch. That is, two arrangement pitches P arranged in the horizontal direction of an arrangement pitch PHA to be focused in the horizontal direction may be different from the arrangement pitch PHA, or two arrangement pitches P arranged in the vertical direction of an arrangement pitch PVA to be focused in the vertical direction may be different from the arrangement pitch PVA.

In the example shown in (1) of Fig. 13B, 5×5=25 light-transmissive portions 30 are provided in the light-transmissive region 12, one arrangement pitch P with respect to the light-transmissive portion 30A to be focused in the horizontal direction is an arrangement pitch PHA, and two arrangement pitches P adjacent to the arrangement pitch PHA in the horizontal direction are an arrangement pitch PHB and an arrangement pitch PHC. An arrangement pitch other than the arrangement pitch PHA adjacent to the arrangement pitch PHB in the horizontal direction is an arrangement pitch PHf. One arrangement pitch P with respect to the light-transmissive portion 30A to be focused in the vertical direction is an arrangement pitch PVA, and two arrangement pitches P adjacent to the arrangement pitch PVA in the vertical direction are an arrangement pitch PVB and an arrangement pitch PVC. Two arrangement pitches P adjacent to the arrangement pitch PVB in the vertical direction are an arrangement pitch PVg and an arrangement pitch PVh.

As schematically shown in (1) of Fig. 13B, in all of the 25 light-transmissive portions 30, each of two other arrangement pitches PH adjacent to one arrangement pitch P in the horizontal direction is different from the one arrangement pitch P, and two other arrangement pitches PV adjacent to one arrangement pitch P in the vertical direction is different from the one arrangement pitch P.

In (1) of Fig. 13B, focusing on the light-transmissive portion 30A, each of the two arrangement pitches PHB and PHC adjacent to the arrangement pitch PHA in the horizontal direction is different from the arrangement pitch PHA, and each of the two arrangement pitches PVB and PVC adjacent to the arrangement pitch PVA in the vertical direction is different from the arrangement pitch PVA. Focusing on the light-transmissive portion 30B, each of the two arrangement pitches PHA and PHf adjacent to the arrangement pitch PHB in the horizontal direction is different from the arrangement pitch PVB, and each of the two arrangement pitches PVa and PVc adjacent to the arrangement pitch PVb in the vertical direction is different from the arrangement pitch PVb. Thus, it is also possible to avoid the occurrence of the diffraction effect in the light-transmissive region 12.

The opening 65A constituting the light-transmissive portion 30 may be shaped so as to obtain the above-described configuration and structure. Here, the minimum value of the size or the minimum shape of the light-transmissive portion 30 depends on the minimum shaping dimension (for example, F: 0.5 $\mu$m) in a photolithography technique or an etching technique for providing the light-transmissive portion 30. Thus, the size of the light-transmissive portion 30 is defined by an assembly of units with the rectangular shape having an area $F^2$ (or a shape derived from the rectangular shape having an area $F^2$ based on the photolithography technique) as one unit, and the shape of the light-transmissive portion 30 is also defined by the assembly of units.

The configuration and structure of the light-transmissive portions in the first modification can be applied to the light-transmissive portions 30 in each of the first and second embodiments.

[Second Modification]

In a second modification, the light-transmissive portions have a double annular structure (double disintermediation structure). The arrangement of a plurality of pixels constituting the image display section 10 in the image display device 1 is schematically shown in (2) of Fig. 13B. Each of the light-transmissive portions 30 is constituted by a first light-transmissive portion 30A and a second light-transmissive portion 30B, and the second light-transmissive portion 30B is arranged so as to surround the first light-transmissive portion 30A. In (2) of Fig. 13B, for clearness of the first light-transmissive portion 30A and the second light-transmissive portion 30B, the first light-transmissive portion 30A and the second light-transmissive portion 30B are hatched. The size, shape, and distribution of each of the first light-transmissive portion 30A and the second light-transmissive portion 30B, and the positional relationship between the first light-transmissive portion 30A and the second light-transmissive portion 30B are optimized, reliably suppressing the occurrence of the diffraction effect.

The configuration and structure of the light-transmissive portions in the second modification can be applied to the light-transmissive portions 30 in each of the first and second embodiments. The first modification and the second modification may be combined.

[Third Modification]

In a third modification, the light-transmissive portion 30 is formed in a curb shape or an "L" shape. (1) and (2) of Fig. 13C schematically show the arrangement of a plurality of pixels 11 (11R, 11G, and 11B) constituting the image display section 10. As shown in (1) and (2) of Fig. 13C, an imaging device-equipped image display device of the third modification has an image display section 10 in which a plurality of pixels 11 each having a display element are arranged, a light-transmissive region 12 (light-transmissive portions 30) which is provided in the image display section 10, an imaging device 20 which is arranged on the rear surface of the image display section 10, and a condensing section 21 which condenses light having passed through the light-transmissive portion 30 on the imaging device 20.

In the example shown in (1) of Fig. 13C, each of the light-transmissive portions 30 is provided in the entire periphery of each pixel 11 and has a curb shape. That is, the light-transmissive portion 30 is provided in all the sides corresponding to the boundary of the pixels and is provided in common between adjacent pixels 11. In the example shown in (2) of Fig. 13C, each of the light-transmissive portions 30 is provided in a part of the periphery of each pixel 11 and has an "L" shape. That is, the light-transmissive portion 30 is provided in two continuous sides from among the sides corresponding to the boundary of the pixels 11.

In the third modification, the light-transmissive portion 30 is provided in the periphery of at least one pixel 11. Specifically, each of the light-transmissive portions 30 is provided in the periphery of each of 6x3=18 pixels 11.

Except for the above-described point, the imaging device-equipped image display device has the same configuration and structure as the image display device 1 of each of the first and second embodiments, thus detailed description thereof will be omitted.

In the third modification, light having passed through the light-transmissive portion 30 provided in the periphery of at least one pixel 11 is condensed on the imaging device 20. Thus, it is not necessary to provide a high-definition minute lens so as to accurately form an image on the imaging device 20. Therefore, an increase in manufacturing cost of the imaging device-equipped image display device can be suppressed, and a sufficient amount of light can be condensed on the imaging device 20.

<Substitute for Monitor of Electronic Apparatus>

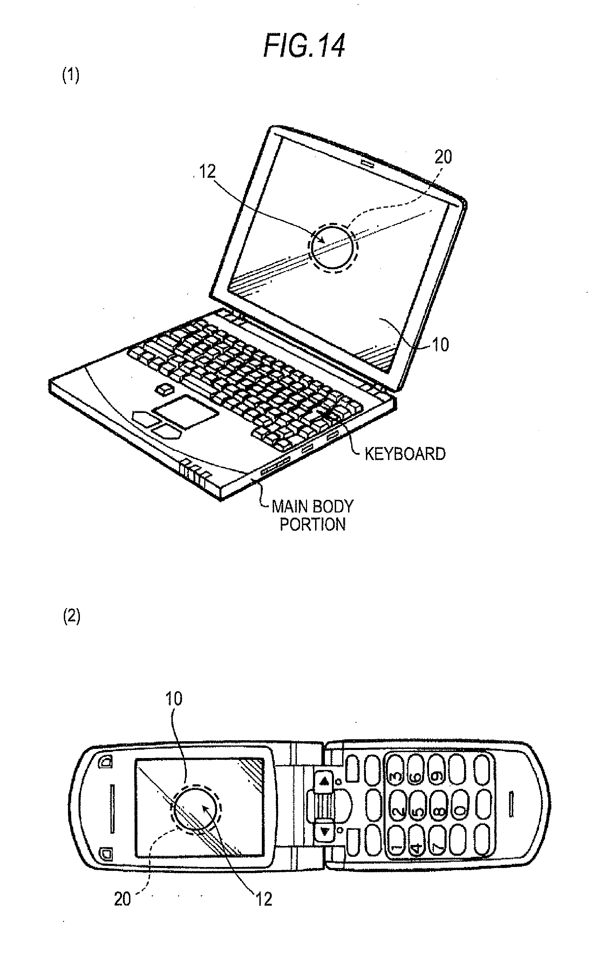

Fig. 14 is a diagram showing an example of an electronic apparatus to which the image display device 1 of this embodiment is applied. The image display device 1A or the image display device 1B is not limited to, for example, a substitute for a monitor constituting a personal computer and may be used as a substitute for a monitor of various electronic apparatuses. For example, the image display device may be used as a substitute for a monitor which is incorporated into a notebook personal computer (see (1) of Fig. 14). The image display device may also be used as a substitute for a monitor which is incorporated into a mobile phone (see (2) of Fig. 14) or, though not shown, a PDA (Personal Digital Assistant) or a game machine, or a known television receiver. In all cases, the light-transmissive region 12 in which the light-transmissive portions 30 (not shown) are formed is provided in the image display section 10, and the imaging device 20 is provided on the rear surface opposite to the display surface.

Although the invention has been described in connection with the embodiments, the technical scope of the invention is not limited to the scope described in the embodiments. Various changes or improvements may be made to the foregoing embodiments without departing from the spirit and scope of the invention, and the forms including the changes or improvements still fall within the scope of the technical scope of the invention.

The foregoing embodiments do not limit inventions of claims, and not all combinations of features described in the embodiments are necessarily essential to solving means of the invention. The foregoing embodiments include inventions in various stages, and various inventions can be extracted by appropriately combining a plurality of disclosed constitutional requirements. Even when a few constitutional requirements are omitted from all the constitutional requirements disclosed in the embodiments, constitutions resulting from the omission of the few constitutional requirements can be extracted as inventions as long as an effect is obtained.

Various modification can be made to the image display device 1 or the image display system 2 described in the foregoing embodiments and may be extracted as inventions. Hereinafter, various modifications will be described. Although the modifications are made to the first embodiment, the invention is not limited thereto, and the modifications may be applied to other embodiments.

[First Modification: position detection]

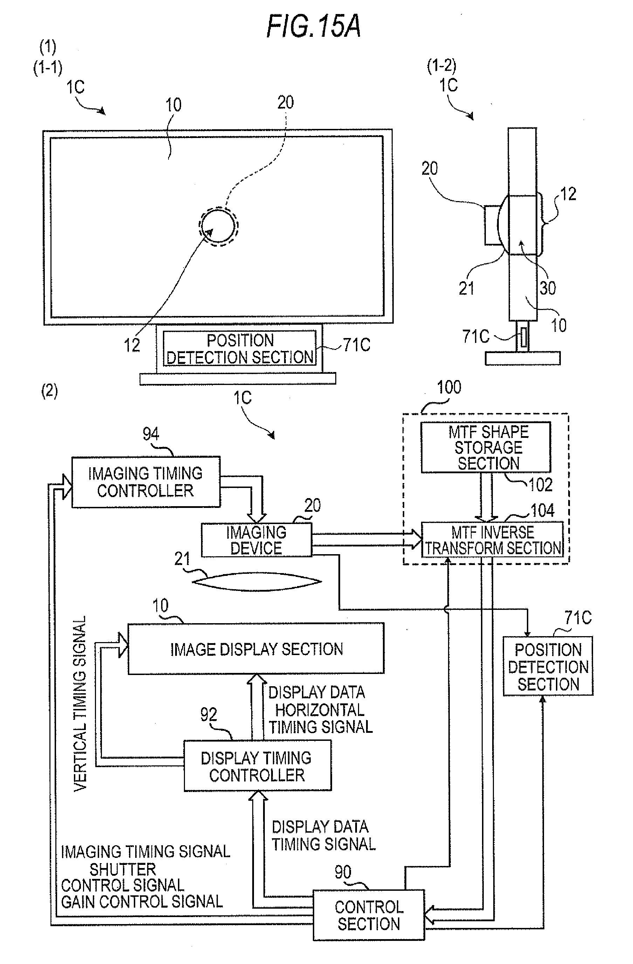

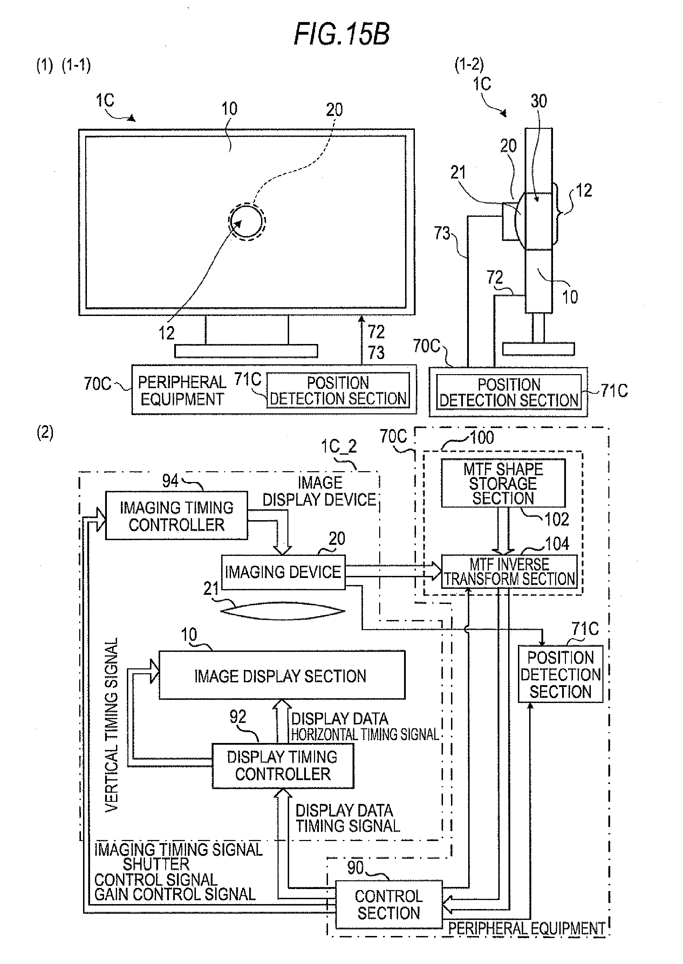

In a first modification shown in Figs. 15A and 15B, a position detection section 71C is provided to obtain position information of a subject on the basis of image information acquired by the imaging device 20. The position detection section 71C may be provided in an image display device 1C or may be provided in a peripheral equipment 70C.

The advantages according to the configuration in which the above-described diffraction correction section 100 is provided can be obtained, thus it is possible to suppress the influence of blurring because of the diffraction effect in the light-transmissive portions 30 and to acquire the position information of the subject with precision. Examples of the subject include the hand, finger, or eyeball of a viewer who views the image display section 10, a rod-like object in the hand of the viewer, and the like.

If the position information of the subject (for example, hand, finger, eyeball, rod-like object (for example, pen, pencil, or the like) is obtained by the position detection section 71C continuously in time series, the motions of the subject can be obtained. For this reason, various kinds of processing (for example, movement of an image up and down or left and right in the monitor of the personal computer, processing for closing a screen, processing for opening another screen, or the like) corresponding to the motions of the subject can be performed. The relationship between the motions of the subject and various kinds of processing may be registered in the position detection section 71C.

As occasion demands, the shapes of the subject (for example, shapes expressed by the body or the form of the hand, shapes expressed by a combination of the fingers, signs, or the like) are obtained from the position information of the subject by the position detection section 71C on the basis of a known algorithm or software, such that various kinds of processing corresponding to the shapes of the subject can be performed. If the directions in which the subject is directed are obtained by the position detection section 71C, various kinds of processing corresponding to the directions in which the subject is directed can be performed.

[Second Modification: three-dimensional display and position detection]

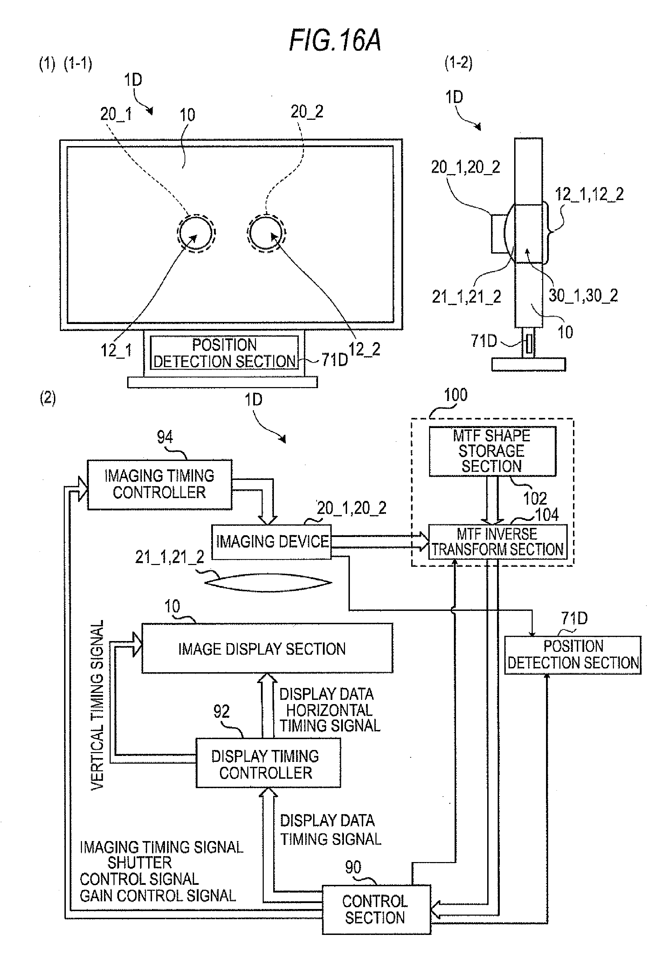

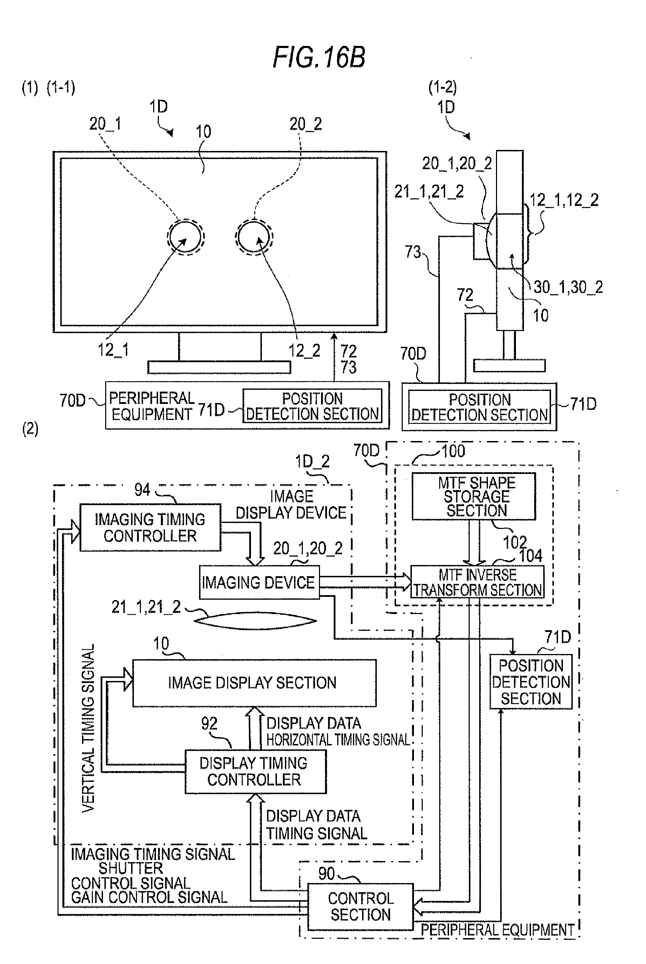

In a second modification shown in Figs. 16A and 16B, a plurality (typically, two) of imaging devices 20 are arranged on the rear surface of the image display section 10, and a position detection section 71D obtains the distance from the image display section 10 to the user on the basis of the image information from each of the imaging devices 20. The position detection section 71D may be provided in an image display device 1D or may be provided in a peripheral equipment 70D.

The advantages according to the configuration in which the above-described diffraction correction section 100 is provided can be obtained, thus it is possible to suppress the influence of blurring because of the diffraction effect in light-transmissive portions 30_1 and 30_2 and to acquire the position information of the viewer with precision.

The position information of the viewer may be set to position data of both eyes of the viewer or may be set to distance data from the image display section 10 to the viewer. The position information of the viewer can be obtained on the basis of both eyes of the viewer who views image data captured through a plurality of imaging devices 20_1 and 20_2. The position information of the viewer can be displayed on the image display section 10. Thus, in order that it is possible for the viewer to easily view a three-dimensional image, an optimum three-dimensional image viewing position can be clearly indicated to the viewer, or an optimum three-dimensional image viewing position can be guided to the user. Alternatively, an image which is displayed on the image display section 10 can be optimized on the basis of the position information of the viewer.

[Third Modification: TV conference system]

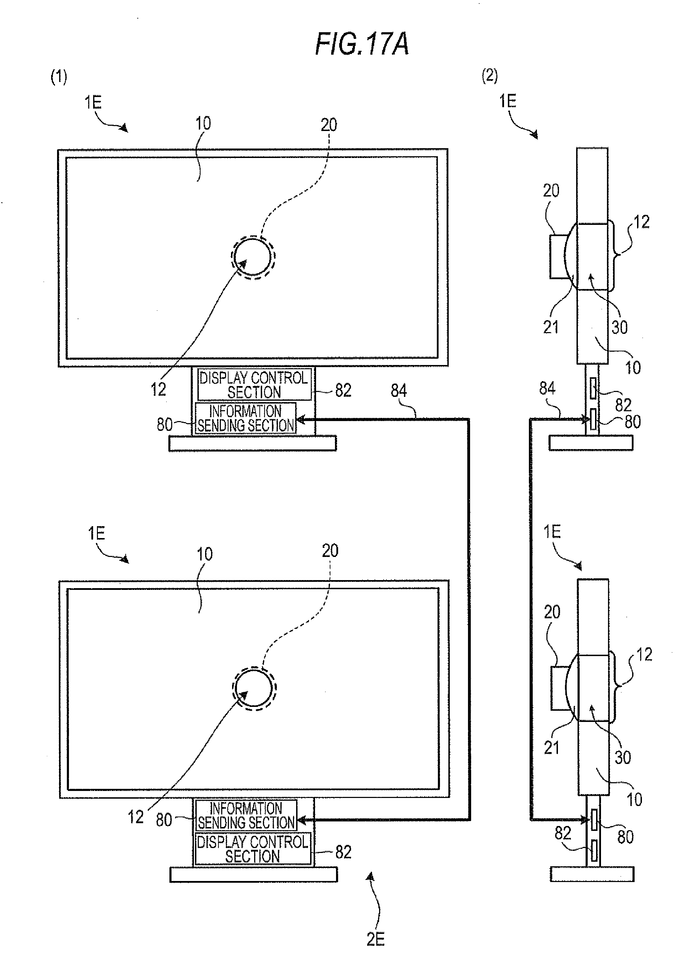

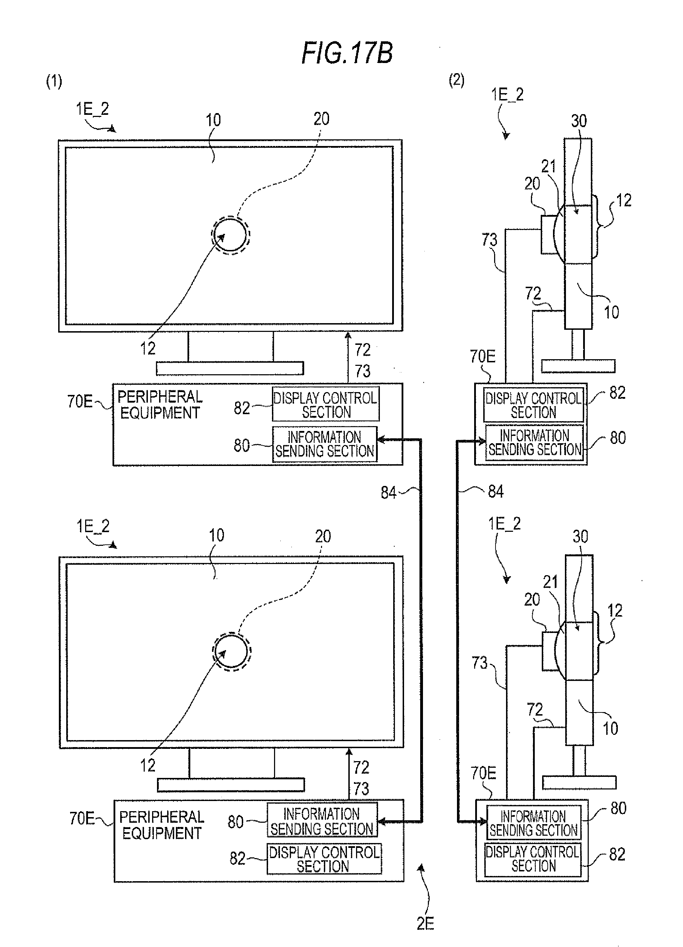

In a third modification shown in Figs. 17A and 17B, the structure of each embodiment is applied to a television teleconference system (videophone system). The third modification further includes an information sending section 80 which sends image information acquired by the imaging device 20, and a display control section 82 which displays an image based on the image information input from the outside on the image display section 10. The image information acquired by the imaging device 20 is sent to the outside by the information sending section 80, and an image based on the image information input from the outside is displayed on the image display section 10 by the display control section 82.

The information sending section 80 and the display control section 82 may be provided in an image display device 1E or may be provided in a peripheral equipment 70E. In Fig. 17A, for convenience, the information sending section 80 and the display control section 82 are shown in the base portion of (the main body of) the image display device 1E. The same method is applied to other modifications described below.

According to the third modification, since the imaging device 20 is arranged on the rear surface of the image display section 10, the face of the user who faces the image display section 10 can be captured. Since the face of another user projected onto the image display section 10 faces the user, there is no sense of discomfort because the line of sight is ill-fitted. The advantages according to the configuration in which the above-described diffraction correction section 100 is provided can be obtained, thus an image, such as the face of the user, is projected onto the image display section 10 of the contact in a state where the influence of blurring because of the diffraction effect in the light-transmissive portions 30.

[Fourth Modification: digital mirror]

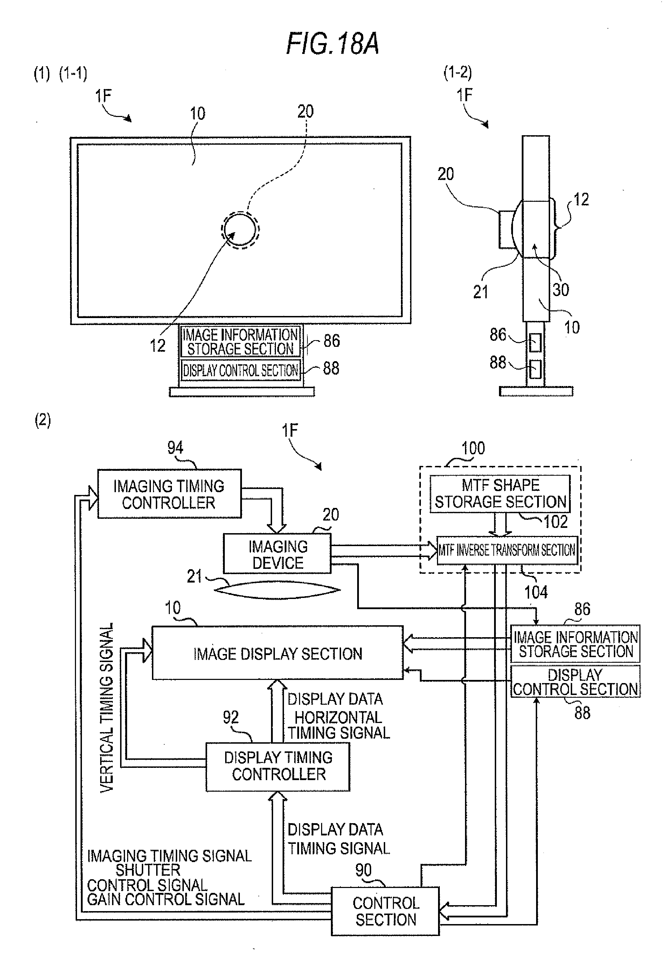

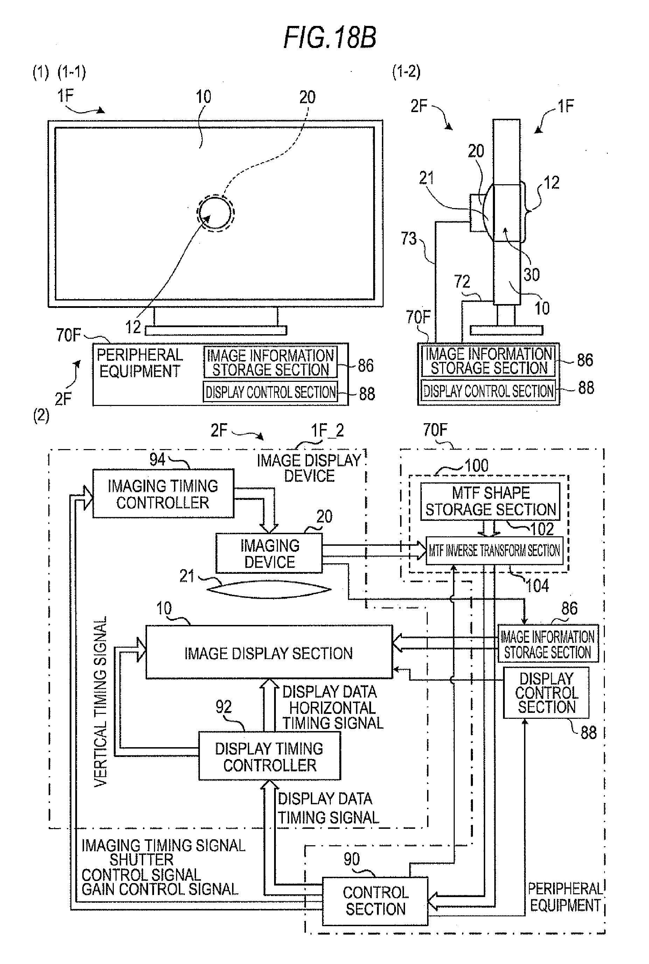

In a fourth modification shown in Figs. 18A to 18B, the image display device 1 of the foregoing embodiment functions as a so-called digital mirror.

The fourth modification further includes an image information storage section 86 which stores image information acquired by the imaging device 20, and a display control section 88 which displays an image based on the image information acquired (and being acquired) by the imaging device 20 and the image information stored in the image information storage section 86 on the image display section 10. The image information storage section 86 and the display control section 88 may be provided in an image display device 1F or may be provided in an peripheral equipment 70F.

According to the fourth modification, in the image display section 10, the comparison result of previous and current users can be displayed in a different window. The advantages according to the configuration in which the above-described diffraction correction section 100 is provided can be obtained, thus an image, such as the face of the user, is projected onto the image display section 10 of the contact in a state where the influence of blurring because of the diffraction effect in the light-transmissive portions 30.

The present application contains subject matter related to that disclosed in Japanese Priority Patent Application JP 2010-114929 filed in the Japan Patent Office on May 19, 2010, the entire contents of which is hereby incorporated by reference.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

It should be understood by those skilled in the art that various modifications, combinations, sub-combinations and alterations may occur depending on design requirements and other factors insofar as they are within the scope of the appended claims or the equivalents thereof.

CLAUSES :

1. An image display device comprising:

an image display section in which a plurality of pixels each having a display element are arranged, an imaging section capturing an image is arrangeable on the rear surface thereof, and a plurality of light-transmissive portions are provided in a region corresponding to the imaging section; and
a diffraction correction section which, for image information acquired by the imaging section through a plurality of light-transmissive portions, performs diffraction correction processing for suppressing an influence appearing in the image information because of a diffraction effect in the light-transmissive portions
wherein the arrangement state of the light-transmissive portions is non-uniform, and
wherein, for the arrangement pitch between two light-transmissive portions, at least two arrangement pitches adjacent to one arrangement pitch are different from the one arrangement pitch.

2. The image display device comprising:

an image display section in which a plurality of pixels each having a display element are arranged, an imaging section capturing an image is arrangeable on the rear surface thereof, and a plurality of light-transmissive portions are provided in a region corresponding to the imaging section; and
a diffraction correction section which, for image information acquired by the imaging section through a plurality of light-transmissive portions, performs diffraction correction processing for suppressing an influence appearing in the image information because of a diffraction effect in the light-transmissive portions

3. The image display device comprising:

an image display section in which a plurality of pixels each having a display element are arranged, an imaging section capturing an image is arrangeable on the rear surface thereof, and a plurality of light-transmissive portions are provided in a region corresponding to the imaging section; and
a diffraction correction section which, for image information acquired by the imaging section through a plurality of light-transmissive portions, performs diffraction correction processing for suppressing an influence appearing in the image information because of a diffraction effect in the light-transmissive portions further comprising:

a condensing section which condenses light having passed through the light-transmissive portion on the imaging section.

4. The image display device comprising:

an image display section in which a plurality of pixels each having a display element are arranged, an imaging section capturing an image is arrangeable on the rear surface thereof, and a plurality of light-transmissive portions are provided in a region corresponding to the imaging section; and
a diffraction correction section which, for image information acquired by the imaging section through a plurality of light-transmissive portions, performs diffraction correction processing for suppressing an influence appearing in the image information because of a diffraction effect in the light-transmissive portions,
wherein the display element is a light-emitting element.

**Claims**

1. An image display device comprising:

an image display section in which a plurality of pixels each having a display element are arranged, an imaging section capturing an image is arrangeable on the rear surface thereof, and a plurality of light-transmissive portions are provided in a region corresponding to the imaging section; and
a diffraction correction section which, for image information acquired by the imaging section through a plurality of light-transmissive portions, performs diffraction correction processing for suppressing an influence appearing in the image information because of a diffraction effect in the light-transmissive portions.

2. The image display device according to claim 1, wherein the diffraction correction section performs Fourier transform image information acquired by the imaging section and performs inverse Fourier transform on the Fourier-transformed information using a response function corresponding to the arrangement state of the light-transmissive portions.

3. The image display section according to claim 1 or 2,
wherein the diffraction correction section performs the diffraction correction processing on at least one (not all) of a plurality of signals representing image information acquired by the imaging section.

4. The image display device according to claim 1 or 2, wherein the diffraction correction section performs the diffraction correction processing on each of a plurality of signals representing image information acquired by the imaging section.

5. The image display device according to claim 3, wherein the diffraction correction section performs the diffraction correction processing on a signal having a correlation with luminance information from among a plurality of signals representing image information acquired by the imaging section.

6. The image display device according to claim 3, wherein the diffraction correction section performs color space conversion on a plurality of signals representing image information acquired by the imaging section so as to include a signal component representing at least luminance information and performs the diffraction correction processing on the signal component representing the luminance information from among a plurality of signals after conversion.

7. The image display device according to claim 3, wherein the diffraction correction section performs the diffraction correction processing by performing color space conversion on a plurality of signals representing image information acquired by the imaging section so as to include a signal component representing at least luminance information, performing Fourier transform a signal component representing the luminance information, and performing inverse Fourier transform on the Fourier-transformed information using a response function corresponding to the arrangement state of the light-transmissive portions for a component having a correlation with luminance information.

8. The image display device according to any one of claims 1 to 7, further comprising:

a wavelength distribution measurement section which measures the wavelength distribution of external light,
wherein the diffraction correction section performs the diffraction correction processing with reference to the wavelength distribution of external light measured by the wavelength distribution measurement section.

9. The image display device according to any one of claims 1 to 8,
   wherein the arrangement state of the light-transmissive portions is non-uniform.

10. The image display device according to claim 9, wherein at least two light-transmissive portions adjacent to one light-transmissive portion are one or more of:

   different in size from the one light-transmissive portion; and
   different in shape from the one light-transmissive portion.

11. An electronic apparatus comprising:

   an imaging section which captures an image;
   an image display section in which a plurality of pixels each having a display element are arranged, the imaging section is arranged on the rear surface thereof, and a plurality of light-transmissive portions are provided in a region corresponding to the imaging section;
   a diffraction correction section which, for image information acquired by the imaging section through a plurality of light-transmissive portions, performs diffraction correction processing for suppressing an influence appearing in the image information because of a diffraction effect in the light-transmissive portions.

12. An electronic apparatus comprising:

   a diffraction correction section which, for image information acquired by an imaging section through a plurality of light-transmissive portions of the image display section, in which a plurality of pixels each having a display element are arranged, an imaging section capturing an image is arrangeable on the rear surface thereof, and a plurality of light-transmissive portions are arranged in a region corresponding to the imaging section, performs diffraction correction processing for suppressing an influence appearing in the image information because of a diffraction effect in the light-transmissive portions.

13. An image display system comprising:

   an imaging device which captures an image;
   an image display device which has an image display section, in which a plurality of pixels each having a display element are arranged, the imaging device is arrangeable on the rear surface thereof, and a plurality of light-transmissive portions are provided in a region corresponding to the imaging device; and
   a diffraction correction section which, for image information acquired by the imaging device through a plurality of light-transmissive portions, performs diffraction correction processing for suppressing an influence appearing in the image information because of a diffraction effect in the light-transmissive portions.

14. A method of acquiring an image, the method comprising the steps of:

   displaying an image on an image display section, in which a plurality of pixels each having a display element are arranged, an imaging section is arrangeable on the rear surface thereof, and a plurality of light-transmissive portions are provided in a region corresponding to the imaging section;
   capturing an image of a subject on a display surface side by the imaging section through a plurality of light-transmissive portions to acquire image information; and
   for the acquired image information, performing diffraction correction processing for suppressing an influence appearing in the image information because of a diffraction effect in the light-transmissive portions.

15. A program which causes a computer to perform:

   for image information acquired by capturing an image of a subject on a display surface side by an imaging section through a plurality of light-transmissive portions of the image display section, in which a plurality of pixels each having a display element are arranged, an imaging section is arrangeable on the rear surface thereof, and a plurality of light-transmissive portions are provided in a region corresponding to the imaging section, performing diffraction correction processing for suppressing an influence appearing in the image information because of a diffraction effect in the light-transmissive portions.

## FIG.1A

(1)
(1-1)

1A

10    20

12

(1-2)

1A

30

20    12

21    10

(2)
(2-1)

1A_2

10    20

12

72
73

PERIPHERAL EQUIPMENT
(MAIN BODY OF PERSONAL COMPUTER)

70A    2A

(2-2)

1A_2

30

20
21    12

73

72    10

PERIPHERAL
EQUIPMENT
(MAIN BODY OF
PERSONAL
COMPUTER)

70A

2A

## FIG.1B

# FIG.2A

(1)

1A

20

21

10

USER DISPLAYED ON IMAGE DISPLAY DEVICE 1A

USER

12 (30)

(2)

1X

20X

10X

USER DISPLAYED ON IMAGE DISPLAY DEVICE 1X

USER

## FIG.2B

(1)

(2)

CAPTURED IMAGE

VIEWER

EP 2 388 997 A2

# *FIG.3*

(1) SCHEMATIC SECTIONAL VIEW

CONDENSING SECTION

IMAGING DEVICE

(2) ELEMENT CONFIGURATION

SECOND SUBSTRATE 67: SODA GLASS

ADHESIVE LAYER 66: ACRYLIC ADHESIVE

LIGHT-BLOCKING LAYER 65: BLACK POLYIMIDE RESIN

PROTECTIVE LAYER 64: SiNx LAYER (THICKNESS 5 $\mu$ m)

SECOND ELECTRODE 62 (CATHODE ELECTRODE): ITO LAYER (THICKNESS 0.1 $\mu$ m)
OR TRANSLUCENT METAL THIN-FILM

ELECTRON INJECTION LAYER: LiF LAYER (THICKNESS 0.3 nm)

ORGANIC LAYER 63: LAMINATE STRUCTURE OF LIGHT-EMITTING LAYER
SERVING AS HOLE TRANSPORT LAYER AND ELECTRODE
TRANSPORT LAYER

FIRST ELECTRODE 61 (ANODE ELECTRODE): Al-Nd LAYER (THICKNESS 0.2 $\mu$ m)

INSULATING INTERLAYER 41: SiO2 LAYER

TFT: CONSTITUTE DRIVING CIRCUIT

FIRST SUBSTRATE 40: SODA GLASS

# FIG.4A

# FIG.4B

(1) IMAGING WITHOUT PASSING THROUGH LIGHT-TRANSMISSIVE PORTION

(2) IMAGING WHILE PASSING THROUGH LIGHT-TRANSMISSIVE PORTION

# FIG.5A

# FIG.5B

## FIG.6

(1) $P_{AT}(X,Y)$

'D:\bm_int_new\case_a_p

$H_{diff} = |\ FFT\ [\ P_{AT}\ ]\ |^2$

'D:\bm_int_new\case_a_mtf.dat'

$MTF = |\ FFT\ [\ H_{diff}\ ]\ |^2$

## FIG.7A

(1)

(2)

# FIG.7B

## FIG.8A

(1)
(1-1)

1B

10    20    110

12

(1-2)

1B    110

20

12

21    30

10

(2)

(2-1)

1B_2    110

10    20

12

72
73

PERIPHERAL EQUIPMENT
(MAIN BODY OF PERSONAL COMPUTER)

70B

2B

(2-2)

1B_2    110

20

21    12

73    30

72    10

PERIPHERAL
EQUIPMENT
(MAIN BODY OF
PERSONAL
COMPUTER)

70B

2B

# FIG.8B

# FIG.8C

## FIG.9
<DIFFRACTION CORRECTION PROCESSING: FIRST EXAMPLE>

※ ALL SIGNAL COMPONENTS

START

S100

CAPTURED RGB DATA

S130

MTF (RED COMPONENT)
MTF (GREEN COMPONENT)
MTF (BLUE COMPONENT)

S140

FFT (RED R)
FFT (GREEN G)
FFT (BLUE B)

S150

FFT (RED R)/MTF (RED COMPONENT)
FFT (GREEN G)/MTF (GREEN COMPONENT)
FFT (BLUE B)/MTF (BLUE COMPONENT)

S160

INVERSE FFT → CORRECTED SIGNALS
IFFT [FFT (RED R)/MTF (RED COMPONENT)]
IFFT [FFT (GREEN G)/MTF
(GREEN COMPONENT)]
IFFT [FFT (BLUE B)/MTF (BLUE COMPONENT)]

S180

ACQUIRE RESTORED IMAGE

END

## FIG.10

### <DIFFRACTION CORRECTION PROCESSING: SECOND EXAMPLE>
### ※ ALL SIGNAL COMPONENTS & COLOR CONVERSION

(1)

START

S200
CAPTURED RGB DATA

S210
COLOR SPACE CONVERSION
ex.RGB→XYZ

S230
MTF (X COMPONENT)
MTF (Y COMPONENT)
MTF (Z COMPONENT)

S240
FFT(X)
FFT(Y)
FFT(Z)

S250
FFT (X)/MTF (X COMPONENT)
FFT (Y)/MTF (Y COMPONENT)
FFT (Z)/MTF (Z COMPONENT)

S260
INVERSE FFT → CORRECTED SIGNALS
IFFT [FFT (X)/MTF (X COMPONENT)]
IFFT [FFT (Y)/MTF (Y COMPONENT)]
IFFT [FFT (Z)/MTF (Z COMPONENT)]

S270
COLOR SPACE CONVERSION
(WITH CORRECTED SIGNALS)
ex.XYZ→RGB

S280
ACQUIRE RESTORED IMAGE

END

(2)

START

S200
CAPTURED RGB DATA

S210
COLOR SPACE CONVERSION
ex.RGB→Yuv

S230
MTF (Y COMPONENT)
MTF (u COMPONENT)
MTF (v COMPONENT)

S240
FFT(Y)
FFT(u)
FFT(v)

S250
FFT (Y)/MTF (Y COMPONENT)
FFT (u)/MTF (u COMPONENT)
FFT (v)/MTF (v COMPONENT)

S260
INVERSE FFT → CORRECTED SIGNALS
IFFT [FFT (Y)/MTF (Y COMPONENT)]
IFFT [FFT (u)/MTF (u COMPONENT)]
IFFT [FFT (v)/MTF (v COMPONENT)]

S270
COLOR SPACE CONVERSION
(WITH CORRECTED SIGNALS)
ex.Yuv→RGB

S280
ACQUIRE RESTORED IMAGE

END

# FIG.11

<DIFFRACTION CORRECTION PROCESSING: THIRD EXAMPLE>
METHOD FOCUSING ON SPECIFIC SIGNAL
※ ONLY ONE COLOR (GREEN HAVING STRONG
CORRELATION WITH LUMINANCE) IS CORRECTED

START

S300

CAPTURED RGB DATA

S330

MTF (GREEN COMPONENT)

S340

FFT (GREEN G)

S350

FFT (GREEN G)/MTF (GREEN COMPONENT)

S360

INVERSE FFT → CORRECTED G
IFFT [FFT (GREEN G)/MTF
(GREEN COMPONENT)]

S380

ACQUIRE RESTORED IMAGE WITH
CORRECTED GREEN IMAGE AND
UNPROCESSED RED IMAGE AND BLUE IMAGE

END

## FIG.12

<DIFFRACTION CORRECTION PROCESSING: FOURTH EXAMPLE>
METHOD FOCUSING ON SPECIFIC SIGNAL
※ ONLY LUMINANCE IS CORRECTED & MTF
IS GREEN COMPONENT

START

S400

CAPTURED RGB DATA

S410

COLOR SPACE CONVERSION
ex.RGB→XYZ
RGB→Yuv

S420

EXTRACT LUMINANCE
COMPONENT Y

S430

MTF (GREEN COMPONENT)

S440

FFT (LUMINANCE Y)

S450

FFT (LUMINANCE Y)/MTF
(GREEN COMPONENT)

S460

INVERSE FFT → CORRECTED Y
IFFT [FFT (LUMINANCE Y)/MTF
(GREEN COMPONENT)]

S470

COLOR SPACE CONVERSION (WITH CORRECTED Y)
ex.XYZ→RGB
Yuv→RGB

S480

ACQUIRE RESTORED IMAGE

END

# FIG.13A

(1)

| 11R | 11G | 11B | 11R | 11G | 11B |
|-----|-----|-----|-----|-----|-----|
| 30  | 30g | 30D | 30  | 30  | 30  |

| 11R | 11G | 11B | 11R | 11G | 11B |
|-----|-----|-----|-----|-----|-----|
| 30f | 30B | 30A | 30C | 30  | 30  |

| 11R | 11G | 11B | 11R | 11G | 11B |
|-----|-----|-----|-----|-----|-----|
| 30  | 30h | 30E | 30  | 30  | 30  |

(2)

| 11R | 11G | 11B | 11R | 11G | 11B |
|-----|-----|-----|-----|-----|-----|
| 30  | 30g | 30D | 30  | 30  | 30  |

| 11R | 11G | 11B | 11R | 11G | 11B |
|-----|-----|-----|-----|-----|-----|
| 30f | 30B | 30A | 30C | 30  | 30  |

| 11R | 11G | 11B | 11R | 11G | 11B |
|-----|-----|-----|-----|-----|-----|
| 30  | 30h | 30E | 30  | 30  | 30  |

# FIG.13B

(1)

| | | | | |
|---|---|---|---|---|
| 11G | 11R | 11G | 11B | 11R |
| 30 | 30 | 30g | 30 | 30 |
| 11G | 11R | 11G | 11B | 11R |
| 30 | 30f | 30B | 30A | 30 |
| 11G | 11R | 11G | 11B | 11R |
| 30 | 30 | 30h | 30 | 30 |
| 11G | 11R | 11G | 11B | 11R |
| 30 | 30 | 30 | 30 | 30 |
| 11G | 11R | 11G | 11B | 11R |
| 30 | 30 | 30 | 30 | 30 |

PVc    PVC
PHf    PHB    PHA    PHC
PVb    PVA
PVa    PVB

(2)

| 11R | 11G | 11B |
|---|---|---|

30B   30   30A

## FIG.13C

(1)

(2)

# FIG.14

(1)

12
20
10
KEYBOARD
MAIN BODY
PORTION

(2)

10
20
12

# FIG.15A

(1)
(1-1)
1C

10

20

12

POSITION DETECTION SECTION — 71C

1C

(1-2)
1C

20

12

21

30

10

71C

(2)

1C

100

MTF SHAPE STORAGE SECTION

102

94

IMAGING TIMING CONTROLLER

20

IMAGING DEVICE

104

MTF INVERSE TRANSFORM SECTION

21

10

IMAGE DISPLAY SECTION

71C

POSITION DETECTION SECTION

VERTICAL TIMING SIGNAL

DISPLAY DATA HORIZONTAL TIMING SIGNAL

92

DISPLAY TIMING CONTROLLER

IMAGING TIMING SIGNAL
SHUTTER CONTROL SIGNAL
GAIN CONTROL SIGNAL

DISPLAY DATA TIMING SIGNAL

90

CONTROL SECTION

# FIG.15B

(1) (1-1)

(1-2)

(2)

## FIG.16A

(1) (1-1)

1D

20_1    10    20_2

12_1    POSITION
DETECTION SECTION    71D    12_2

(1-2)

1D

20_1,20_2    12_1,12_2

21_1,21_2    30_1,30_2

71D    10

(2)

1D

94

IMAGING TIMING
CONTROLLER

20_1,20_2

IMAGING DEVICE

21_1,21_2

10

IMAGE DISPLAY SECTION

DISPLAY DATA
HORIZONTAL
TIMING SIGNAL

92

DISPLAY TIMING
CONTROLLER

DISPLAY DATA
TIMING SIGNAL

VERTICAL TIMING SIGNAL

IMAGING TIMING SIGNAL
SHUTTER
CONTROL SIGNAL
GAIN CONTROL SIGNAL

90

CONTROL
SECTION

100

MTF SHAPE
STORAGE
SECTION

102
104

MTF INVERSE
TRANSFORM SECTION

71D

POSITION
DETECTION SECTION

FIG.16B

## FIG.17A

(1)

(2)

1E

10

20

12

DISPLAY CONTROL
SECTION

INFORMATION
SENDING SECTION

82

80

84

1E

20

21

12

30

10

84

82

80

1E

10

20

12 80

INFORMATION
SENDING SECTION

DISPLAY CONTROL
SECTION

82

84

1E

20

21

12

30

10

82

80

2E

## FIG.17B

(1)

(2)

# FIG.18A

(1) (1-1)

1F

10

20

12 — IMAGE INFORMATION STORAGE SECTION — 86

DISPLAY CONTROL SECTION — 88

(1-2)

1F

20

12

21

30

10

86

88

(2)

1F

94

IMAGING TIMING CONTROLLER

100

MTF SHAPE STORAGE SECTION

102

20

IMAGING DEVICE

MTF INVERSE TRANSFORM SECTION

21

104

10

86

IMAGE DISPLAY SECTION

IMAGE INFORMATION STORAGE SECTION

DISPLAY CONTROL SECTION

88

92

DISPLAY DATA HORIZONTAL TIMING SIGNAL

DISPLAY TIMING CONTROLLER

VERTICAL TIMING SIGNAL

DISPLAY DATA TIMING SIGNAL

IMAGING TIMING SIGNAL
SHUTTER CONTROL SIGNAL
GAIN CONTROL SIGNAL

90

CONTROL SECTION

# FIG.18B

(1) (1-1)

(1-2)

(2)

**REFERENCES CITED IN THE DESCRIPTION**

**Patent documents cited in the description**

- JP 2005176151 A
- JP 2005010407 A
- JP 2010114929 A